(19) Europäisches Patentamt
European Patent Office
Office européen des brevets

(11) EP 1 477 547 B1

(12) EUROPEAN PATENT SPECIFICATION

(45) Date of publication and mention of the grant of the patent:
**14.06.2006 Bulletin 2006/24**

(21) Application number: **04010419.2**

(22) Date of filing: **03.05.2004**

(51) Int Cl.:
*C09K 19/58* (2006.01) *C09K 19/20* (2006.01)
*C09K 19/04* (2006.01) *C09K 19/34* (2006.01)

# (54) Liquid crystalline medium and liquid crystal display

Flüssigkristallines Medium und Flüssigkristallanzeige

Milieu liquide cristallin et dispositif d'affichage à cristaux liquides

(84) Designated Contracting States:
**AT BE BG CH CY CZ DE DK EE ES FI FR GB GR HU IE IT LI LU MC NL PL PT RO SE SI SK TR**

(30) Priority: **09.05.2003 EP 03010473**

(43) Date of publication of application:
**17.11.2004 Bulletin 2004/47**

(73) Proprietor: **Merck Patent GmbH**
**64293 Darmstadt (DE)**

(72) Inventors:
- **Schott, Cecile, Dr.**
  **Southampton SO17 2HJ (GB)**
- **Ionescu, Doina, Dr.**
  **Southampton,**
  **Hampshire SO16 7DF (GB)**

(56) References cited:

| | |
|---|---|
| **EP-A- 0 281 341** | **EP-A- 0 971 016** |
| **DE-A- 10 112 769** | **GB-A- 2 356 629** |
| **GB-A- 2 387 603** | **US-A- 4 818 076** |
| **US-A- 4 988 458** | |

- **CHA S W ET AL: "DIMESOGENIC COMPOUNDS CONSISTING OF A CHOLESTERYL MOIETY AND AN AROMATIC MESOGEN INTERCONNECTED THROUGH A CENTRAL PENTAMETHYLENE SPACER" LIQUID CRYSTALS, TAYLOR AND FRANCIS LTD, LONDON, GB, vol. 26, no. 9, September 1999 (1999-09), pages 1325-1337, XP000887767 ISSN: 0267-8292**
- **JIN J-I: "LIQUID CRYSTALLINE BEHAVIOR OF NOVEL DIMESOGENIC COMPOUNDS" MOLECULAR CRYSTALS AND LIQUID CRYSTALS, GORDON AND BREACH, LONDON, GB, vol. 267, 1995, pages 249-265, XP002033647 ISSN: 0026-8941**
- **BLATCH A E ET AL: "SYMMETRIC AND NON-SYMMETRIC LIQUID CRYSTAL DIMERS WITH BRANCHED TERMINAL ALKYL CHAINS: RACEMIC AND CHIRAL" JOURNAL OF MATERIALS CHEMISTRY, THE ROYAL SOCIETY OF CHEMISTRY, CAMBRIDGE, GB, vol. 7, no. 1, 1997, pages 9-17, XP000692129 ISSN: 0959-9428**
- **"Liquid crystalline properties of dimesogenic compounds consisting of two different azobenzene types of mesogens interlinked through central polymethylene spacers" MOLECULAR CRYSTALS AND LIQUID CRYSTALS, GORDON AND BREACH, LONDON, GB, vol. 309, 1998, pages 117-132, XP008035369**

Remarks:
The file contains technical information submitted after the application was filed and not included in this specification

EP 1 477 547 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

Field of the invention

The present invention relates to liquid crystalline media and to liquid crystal displays comprising these media, especially to displays exploiting the flexoelectric effect in chiral nematic liquid crystals and in particular to displays operating in the uniformly lying helix mode.

State of the art and problem to be solved

The flexoelectric effect is well known since quite some time from the paper by Patel and Meyer (Phys. Rev. Lett. **58** (15), p. 1538-1540 (1987)) and has more recently been reviewed by Rudquist et al. (Liq. Cryst. **22** (4), 445-449 (1997).

The uniform lying helix (ULH) texture is realized using a chiral nematic liquid crystal with a short pitch, typically in the range from 0.2 μm to 1 μm, preferably of 1.0μm or less, in particular of 0.5 μm or less, which is unidirectionally aligned with it's helical axis parallel to the substrates, e. g. glass plates, of a liquid crystal cell. In this configuration the helical axis of the chiral nematic liquid crystal is equivalent to the optical axis of a birefringent plate.

If an electrical field is applied to this configuration normal to the helical axis the optical axis is rotated in the plane of the cell, similar as the director of a ferroelectric liquid crystal rotates in a surface stabilized ferroelectric liquid crystal display. The flexoelectric effect is characterised by fast response times typically ranging from 6 μs to 100 μs. It further features excellent grey scale capability.

The electric field can be understood to essentially flexoelectrically couple to the induced splay-bend deformation of the director. The angle of the rotation of the axis is in first approximation directly and linearly proportional to the strngth of the electrical field. The optical effect is best seen when the liquid crystal cell is placed between crossed polarizers with the optical axis in the unpowered state at an angle of 22.5° to the absorption axis of one of the polarizers. This angle of 22.5° is also the ideal angle of rotation of the of the electric field, as thus, by the inversion the electrical field, the optical axis is rotated by 45° and by appropriate selection of the relative orientations of the preferred direction of the axis of the helix, the absorption axis of the polarizer and the direction of the electric field, the the optical axis can be switched from parallel to one polarizer to the center angle between both polarizers. The optimum contrast is then achieved when the total angle of the switching of the optical axis is 45°. In that case the arrangement can be used as a swtchable quarter wave plate, provided the optical retardation, i. e. the product of the effective birefringence of the liquid crystal and the cell gap, is selected to be the quarter of the wave length. In this context the wavelength referred to is 550 nm, the wavelenght for which the sensitivity of the human eye is highest, unless explicitly stated otherwise.

The angle of rotation of the optical axis (Φ) is given in good approximation by formula (1).

$$\tan \Phi = \bar{e}\ P_0\, E / (2 \pi K) \qquad (1)$$

wherein

- $P_0$ is the undisturbed pitch of the cholesteric liquid crystal,
- $\bar{e}$ is the average [$\bar{e}$ = ½ ($e_{splay}$ + $e_{bend}$)] of the splay flexoelectric coefficient ($e_{splay}$) and the bend flexoelectric coefficient ($e_{bend}$),
- E is the electrical field strength and
- $K$ is the average [K = ½ ($k_{11}$ + $k_{33}$)] of the splay elastic constant ($k_{11}$) and the bend elastic constant ($K_{33}$)

and wherein

$\bar{e}/K$ is called the flexo-elastic ratio.

This angle of rotation is half the switching angle in a flexoelectric switching element.

The response time (τ) of this electro-optical effect is given in good approximation by formula (2).

$$\tau = [P_0/(2 \pi)]^2 \cdot \gamma / K \qquad (2)$$

wherein
$\gamma$ is the effective viscosity coefficient associated with the distortion of the helix.

There is a critical field ($E_c$) to unwind the helix, which can be obtained from equation (3).

$$E_c = (\pi^2 / P_0) \cdot [k_{22}/(\varepsilon_0 \cdot \Delta\varepsilon)]^{1/2} \qquad (3)$$

wherein

$k_{22}$ is the twist elastic constant,
$\varepsilon_0$ is the permittivity of vacuum and
$\Delta\varepsilon$ is the dielectric anisotropy of the liquid crystal.

Liquid Crystal Displays (LCDs) are widely used to display information. Electro-optical modes employed are e.g. the twisted nematic (TN)-, the super twisted nematic (STN)-, the optically compensated bend (OCB)- and the electrically controlled birefringence (ECB)-mode with their various modifications, as well as others. Besides these modes, which all do use an electrical field, which is substantially perpendicular to the substrates, respectively to the liquid crystal layer, there are also electro-optical modes employing an electrical field substantially parallel to the substrates, respectively the liquid crystal layer, like e.g. the In-Plane Switching mode (as disclosed e.g. in DE 40 00 451 and EP 0 588 568). Especially this electrooptical mode is used for LCDs for modem desk top monitors.

The liquid cystals according to the present invention are preferably used in flexoelectric, chiral nematic devices, preferably in displays or in electrooptical devices like switches for light or optical components.

Preferably displays according to the present invention are addressed by an active matrix i.e. a matrix of active electrical elements with a nonlinear current - voltage characteristic. These active elements preferably are thin film transistors (TFTs). They can be used for direct view applicatoins as well as for projection type displays.

A chiral substance mixed with a nematic material induces a helical twist transforming the material into a chiral nematic material, which is equivalent to a cholesteric material. The terms chiral nematic and cholesteric are used synonymously in this application, unless explicitly stated otherwise. One difference between a cholesteric material and a chiral nematic material, however, is the fact, that the cholesteric pitch of the latter can be varied over a rather large range with comparative ease. The pitch induced by the chiral substance is in a first approximation inveresely proportional to the concentration of the chiral material used. The constant of proportionality of this relation is called the helical twisting power (HTP) of the chiral substance and defined by equation (4)

$$HTP \equiv 1 / (c \cdot P_0) \qquad (4)$$

wherein

c is concentration of the chiral compound.

For these displays new liquid crystalline media with improved properties are required. Especially the birefingence (An) should be optimised for the optical mode. I.e. the optical retardation ($d \cdot \Delta n$) should be preferably such that the equation (5)

$$\sin^2(\pi \cdot d \cdot \Delta n/\lambda) = 1 \qquad (5)$$

wherein

d is the cell gap and
$\lambda$ is the wave length of light

is satisfied. The allowance of deviation for the right hand side of equation (5) is +/- 3%.

The wave length of light generally referred to in this application is 550 nm, unless explicitly specified otherwise.

The cell gap of the cells preferably is in the range from 1 $\mu$m to 20 $\mu$m, in particular with in the range from 2.0

μm to 10 μm.

Further, on the one hand, the dielectric anisotropy (Δε) should be high enough to allow the coupling of the electrical field during orientation of the chiral nematic liquid crystal, but, on the other hand, at the same time it should be as small as possible, to prevent unwinding of the helix upon application of the addressing voltage. Preferably Δε should be higher than 0 and very preferably be 0.1 or more; but preferably 10 or less, more preferably 7 or less and most preferably 5 or less. Besides these parameters, the media have to exhibit a suitably wide range of the nematic phase, a rather small rotational viscosity and an at least moderately high specific resistivity.

The displays according to the present invention are preferably addressed by an active matrix (active matrix LCDs, short AMDs), preferably by a matrix of thin film transistors (TFTs). However, the inventive liquid crystals can also beneficiously be used in displays with other known addressing means.

Liquid crystal compositions with short cholesteric pitch for flexoelectric devices are known from EP 0 971 016, GB 2 356 629 and Coles, H.J., Musgrave, B., Coles, M.J., and Willmott, J., J. Mater. Chem., **11**, p. 2709-2716 (2001). EP 0 971 016 discloses mesogenic estradiols, which, as such, have a high flexoelectrc coefficient. GB 2 356 629 discloses bimesogenic compounds and their use in flexoelectric devices. The flexoelectric effect has been investigated in pure cholesteric liquid crystal compounds and in mixtures of homologous compounds only so far. Most of these compounds were used in binary mixtures consisting of a chiral additive and a nematic liquid crystal material being either a simple, conventional monomesogenic material or a bimesogenic one. These materials do have several drawbacks for practical applications, like insufficiently wide temperature ranges of the chiral nematic - or cholesteric phase, too small flexoelectric ratios, small angles of rotation.

The cyanobiphenyl-based bimesogens have low solubility and are nematic at high temperatures (e.g. the switching behaviour of CBO8OCB + 3% BDH-1281 can only be investigated above 168°C). Therefore, they are not suitable for practical applications since they cannot be used in room temperature displays (see J. Mater. Chem., **11**, p. 2709-2716 (2001)). The monomesogenic materials exhibit good solubility properties but in chiral-doped systems, the helix unwinds at low voltages (e.g. for 7CB + 4% BDH-1305, the maximum tilt angle is 6° before the helix unwinds at about 20V for a 4μm thick cell). Furthermore, the investigations on these systems were performed at relatively high relative temperatures which are only slightly below the respective clearing points of the materials, typically about 12°C below the clearing point.

Similar difficulties were encountered with the pure cholesteric materials such as the homologous series of estradiols. These are not liquid crystalline at room temperature and additionally, the maximum rotation angles achieved are only 10° or less.

Furthermore, there has been a problem to achieve the orientation of cholesteric liquid crystals in the uniaxially lying helix texture in a well reproducible way. Coles et al., J. Mater. Chem., 2001, **11**, pp. 2709-2716, mentioned above, reports that monomesogenic liquid crystals containing a chiral additive, which exhibit blue phases promote the easy formation of the uniaxially lying helix texture. When such materials are enclosed in liquid crystal cells between two walls, at least one of which is provided with an alignment layer for planar alignment, they spontaneously form a uniformly lying helix texture upon application of an alternating electrical field across the material while it is in its blue phase. Subsequently the sample is cooled into the cholesteric phase under the applied field. In this case no mechanical manipulation, like shearing the liquid crystal sample, is required to obtain the uniform alignment. However, this reference only discloses only cholesteric liquid crystal materials based on monomesogenic liquid crystal materials but does not even mention bimesogenic liquid crystals.

It further has been reported by Blatch et al., J. Mater. Chem., 1997, **7**(1), pp. 9-17, that liquid crystal materials comprising bimesogenic liquid crystals with an odd number of atoms in the spacer group, which are further comprising a chiral centre sufficient to achieve a helical pitch of 500 nm or less, do generally exhibit blue phases.

Thus, there is a significant need for liquid crystalline media with suitable properties for practical applications such as e.g. computer monitors, screens for television sets and the like, displays for multi media applications, hand held tele-communication devices, automatic teller machines and light modulators. They have to have a wide nematic phase range, low viscosities, a high Δε, a sufficiently high resistivity and, in particular, an appropriately optimised optical anisotropy Δn-for a given cell thickness depending on the display mode used.

## Present invention

Surprisingly, it now has been found that liquid crystalline media with a sufficiently wide range of the chiral nematic phase and suitably high flexo-elastic ratio and sufficiently short response time can be realised using a liquid crystal medium comprising

- a chiral component, component A;
- a bimesogenic component, component B;
- a dielectrically positive component, component C; and

- optionally a dielectrically negative component, component D; and
- optionally a dielectrically neutral component, component E;

characterized in that
said component B comprises a bimesogenic compound having a non-symmetric structure and
said component C comprises one or more compounds selected from the group of compounds of formulae IIIb to IIIg

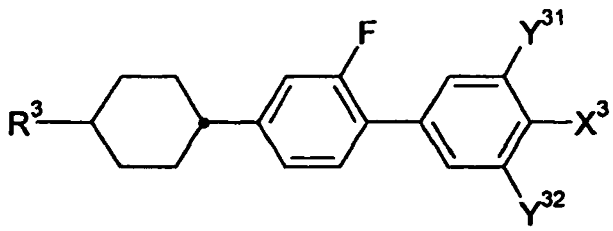

IIIb

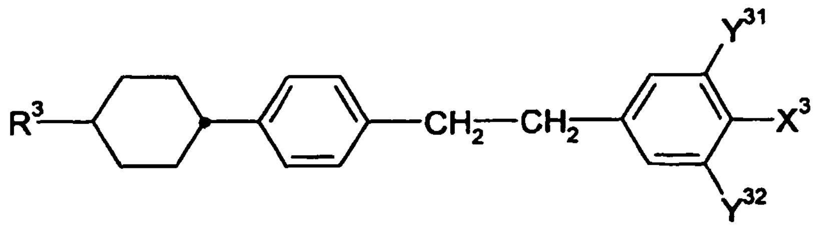

IIIc

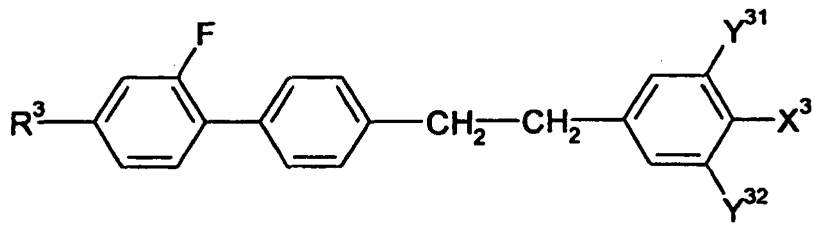

IIId

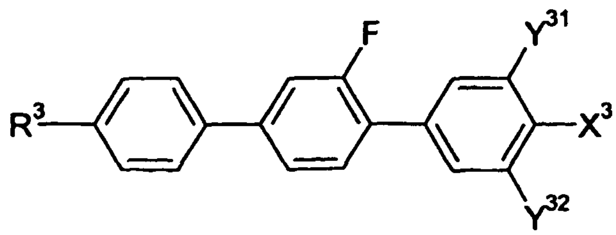

IIIe

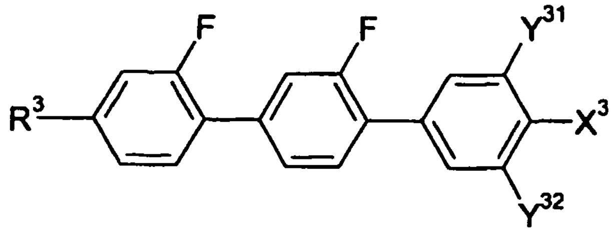

IIIf

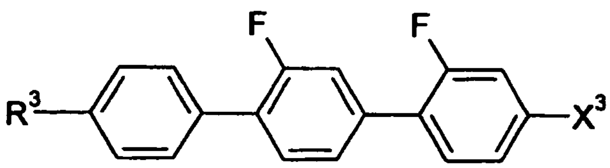

IIIg

wherein

$R^3$ is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms;

$X^3$ is F, Cl or fluorinated alkyl or fluorinated alkoxy, each with 1 to 4 C-atoms, preferably $OCF_3$, $OCF_2H$, F or Cl, most preferably F; and

$Y^{31}$ and $Y^{32}$ are, independently of each other H or F;

wherein, optionally, two of the 6-membered rings shown directly linked, may be linked by a group selected from $-CH_2-CH_2-$, $-CF_2-CF_2-$, $-CF_2-O-$, $-O-CF_2-$ and -CO-O-.

These media according to the present invention do not exhibit the drawbacks of the materials of the prior art or at least do exhibit them to a significantly lesser degree.

Preferably the base mixtures used in the media according to the present invention have a chiral nematic phase.

The base mixtures preferably have a positive dielectric anisotropy, in order to further the alignment of the axis of the helix in the plane of the cell. However, at the same time, the dielectric anisotropy of the base mixture has to be limited , as otherwise there would be an undesired unwinding of the helix upon application of the electrical field instead of the desired switching of the axis of the helix. The dielectric anisotropy of the base mixture preferably is in the range from 0 or more to 10 or less and especially preferably 8.0 or less and in particular from 0 or more to 6.0 or less, preferably from 0 or more, preferably 0.1 or more to 5 or less.

It is, therefore, preferred that the liquid crystal medium according to the invention comprises a dielectrically positive component, component C.

In this application the terms room temperature and ambient temperature refer to a temperature of 20°C, unless explicitly stated otherwise.

The clearing point of the mixtures according to the present invention typically are 60°C or more, preferably 70°C or more, more preferably 75°C or more and especially preferred 80°C or more.

The unwinding voltage for the helical structure of the mixture is typically 30V or more, preferably 50V or more, more preferably 70V or more and especially 75V or more at room temperature for a 5μm thick cell.

The tilt angle for the liquid crystalline mixture is typically 5° or more, preferably 10° or more, more preferably 15° or more, and especially 22.5° for a voltage of typically 10V or more, for 5μm cell thickness, at room temperature.

It is preferred that a dielectrically neutral component, component E is present the liquid crystal medium of the invention.

It is further preferred that said component B of the liquid crystal medium according to the invention comprises a bismesogenic compound having a non-symmetric structure and an odd number of atoms in the spacer group between the two mesogenic units.

Furthermore, the liquid crystal medium of the invention preferably comprises both a dielectrically negative

component, component D and a dielectrically neutral component, component E.

With regard to the chiral component, component A it is preferred that said component is a mesogenic component, preferably consisting of chiral compounds, preferably comprising one or more compounds selected from the group of formulae I, I' and I"

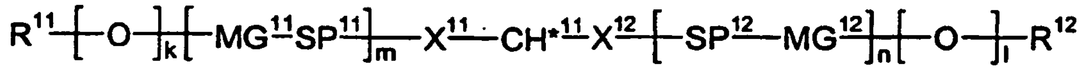

I

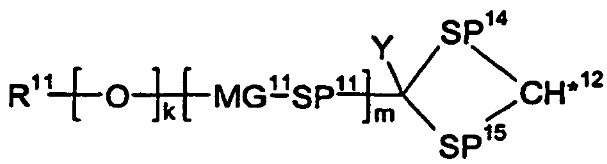

I'

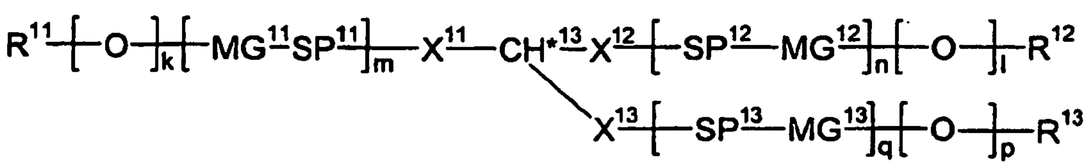

I"

wherein

| | |
|---|---|
| $R^{11}$, $R^{12}$ and $R^{13}$ | are each, independently of one another, F, Cl, CN, $NO_2$, NCS, SCN, OCN, a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -OCOO-,- S-CO-, -CO-S-, -CH=CH-, -CH=CF-, -CF=CH-, -CF=CF- or -C≡C- in such a manner, that oxygen atoms are not linked directly to one another, or, in case they are not linked to an O atom, H; |
| Y | has the meaning given for $R^{11}$ and is preferably H, F, $CH_3$ or $CF_3$, more preferably H or F; |
| $SP^{11}$, $SP^{12}$ and $SP^{13}$ | are each, independently of one another, a divalent spacer group comprising 1 to 40, preferably 4 to 20, C atoms, preferably an alkylene group, it being also possible for one or more $CH_2$ groups in the spacer groups to be replaced, in each case independently from one another, by -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF-, $-CF_2-$ or -C≡C- in such a manner, that oxygen atoms are not linked directly to one another; |
| $SP^{14}$ and $SP^{15}$ | are each, independently of one another, a divalent spacer group comprising 1 to 40, preferably 4 to 20, C atoms; |
| $X^{11}$, $X^{12}$ and $X^{13}$ | are each, independently of one another, -O-, -S-, -CO-, -COO-, -OCO-, -OCOO-, -CO-NH-, -NH-CO-, $-CH_2CH_2-$, $-OCH_2-$, $-CH_2O-$, $-SCH_2-$, $-CH_2S-$, -CF=CF-, -CH=CH-, -OCO-CH=CH-, -C ≡C- or a single bond; |
| k, l, n, m, p and q | are each, independently of one another, 0 or 1, with m being preferably 1, |
| m+n+q | is 1, 2 or 3, for formula I preferably 2, for formula I' preferably 1 and for formula I" preferably 2 or 3 and most preferably 2; |
| $MG^{11}$, $MG^{12}$ and $MG^{13}$ | are each, independently of one another, a mesogenic group, preferably of the formula I''' |

$$-A^{11}-(Z^{1}-A^{12})_{i1}- \qquad I'''$$

wherein

$A^{11}$ and $A^{12}$ are each, independently of one another, a bivalent ring group containing preferably at least four C atoms, preferably a five- or a six-membered ring and preferably has the meaning given for ring $A^{31}$ under formula III below;

$Z^1$ each have , independently of one another, the meaning given for $Z^{31}$ under formula III below; and

i1 is 0, 1 or 2, preferably 0 or 1;

$CH^{*11}$ is a chiral, bivalent group, preferably with a chiral center or with one or more chiral atoms preferably selected from the group of formulae Ia to In

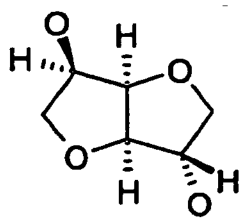

Ia ,

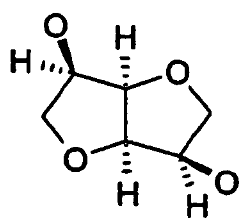

Ib ,

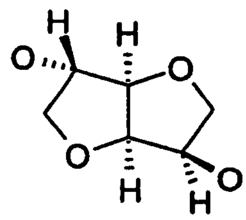

Ic ,

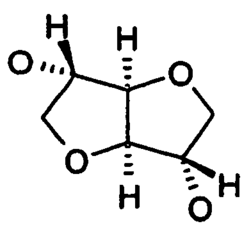

Id ,

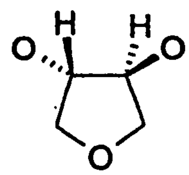

Ie ,

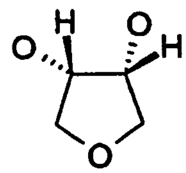

If ,

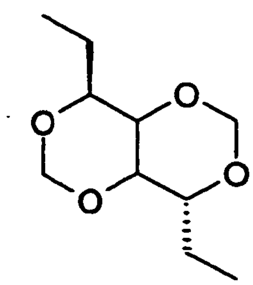

Ig ,

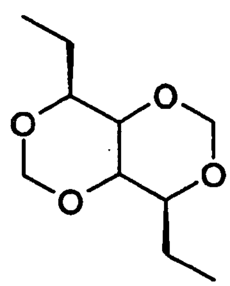

Ih ,

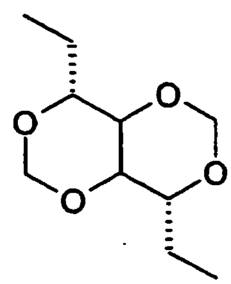

Ii ,

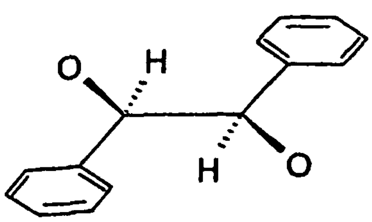

Ij ,

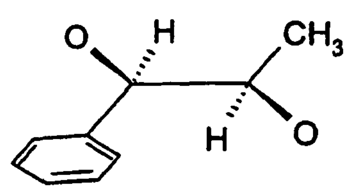

Ik ,

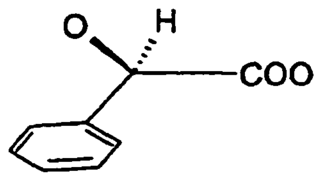

Il ,

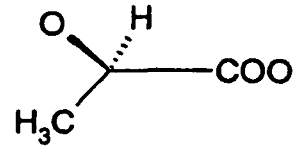

Im ,

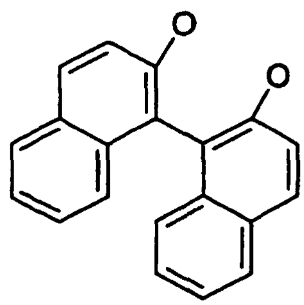

In , or their mirror images, if not depicted;

CH*[12] is a chiral, bivalent group, preferably with a chiral center or with one or more chiral atoms preferably selected from the group of formulae Ie, If and In, or their mirror images, if not depicted, especially preferred In; and

CH*[13] is a chiral, trivalent group, preferably with a chiral center or with one or more chiral atoms preferably -CH=, -CF=, $-C(CH_3)=$, $-C(OCH_3)=$ or $-C(CF_3)=$;

where in all groups Ia to Ik, and especially preferred in the aromatic rings of groups Ij, Ik, I and In, optionally one or more hydrogen atoms can be replaced by further aromatic rings, aliphatic rings, alkyl chains, alkoxy chains, alkenyl chains and alkenyloxy chains, which all may be substituted by halogen atoms, especially fluorine, or CN.

With regard to the bimesogenic component, component B, of the liquid crystal medium according to the invention said component is preferably a mesogenic component preferably consisting of bimesogenic compounds, preferably comprising one or more compounds of formula II,

$$R^{21}-[O]_i-MG^{21}-SP^{2}-MG^{22}-[O]_j-R^{22} \qquad II$$

wherein

$R^{21}$ and $R^{22}$ are each, independently of one another, F, Cl, CN, $NO_2$, NCS, SCN, OCN, a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -OCOO-, - S-CO-, -CO-S-, -CH=CH-, -CH=CF-, -CF=CH-, -CF=CF- or -C ≡C- in such a manner, that oxygen atoms are not linked directly to one another, or, in case they are not linked to an O atom, H;

$MG^{21}$ and $MG^{22}$ are each, independently of one another, a mesogenic group and have preferably the meaning given for $MG^{11}$ under formula I above,

$SP^2$ is a divalent spacer group comprising 1 to 40, preferably 3 to 20, C atoms, preferably an alkylene group, it being also possible for one or more $CH_2$ groups in the spacer groups to be replaced, in each case independently from one another, by -O-, - S-, -NH-, $-N(CH_3)-$, -CO-, -COO-, -OCO-,

-OCOO-, - S-CO-, -CO-S-, -CH=CH-, -CH=CF-, -CF=CH-, -CF=CF-, $-CF_2-$ or -C ≡C- in such a manner, that oxygen atoms are not linked directly to one another;

i and j are, independently of each other, 0 or 1;

whereby the moiety $R^{21}$-[-O-]$_i$-$MG^{21}$- is different from the moiety $R^{22}$-[-O-]$_j$-$MG^{22}$-, i.e. the compound of formula II is non-symmetric.

Besides said at least one non-symmetric bimesogenic compound component B may also comprise one or more bimesogenic compounds having a symmetric structure. These symmetric bimesogens preferably have a structure similar to those of formula II with the exception that the moiety $R^{21}$-[-O-]$_i$-$MG^{21}$- is not different from the moiety $R^{22}$-[-O-]$_j$-$MG^{22}$-.

With regard to the dielectrically positive component, component C it is preferred that said component is consisting of dielectrically positive compounds, preferably comprising one or more compounds of formula III and, optionally, further dielectrically positive compounds

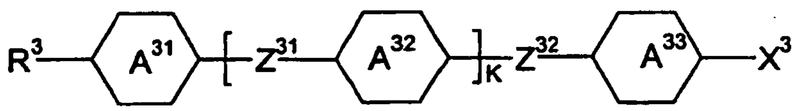

III

wherein

$R^3$ is H, F, alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms;

$X^3$ H, CN, NCS, F, Cl or fluorinated alkyl or fluorinated alkoxy, each with 1 to 4 C-atoms, preferably CN, $OCF_3$, $OCF_2H$, F or Cl, most preferably $OCF_3$ or H;

$Z^{31}$ and $Z^{32}$, independently of each other, and in case $Z^{31}$ is present twice, also these independently of each other, are $-CH_2-CH_2-$, $-CF_2-CF_2-$, $-CF_2-O-$, $-O-CF_2-$ -CO-O- or a single bond, preferably $-CH_2-CH_2-$, -CO-O- or a single bond;

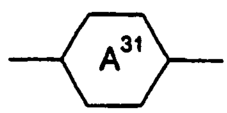, 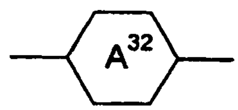 and 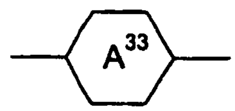,

independently of each other, and in case

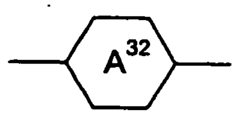

is present twice, also these independently of each other, are

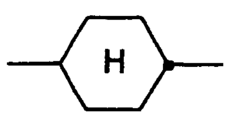 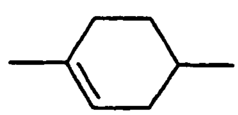, 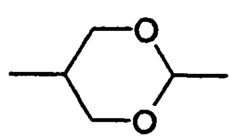, 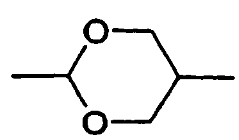,

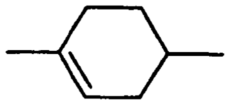 , 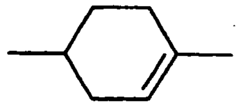 , 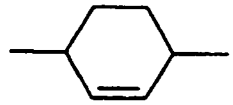 ,

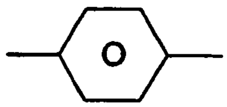 , 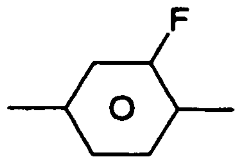 , 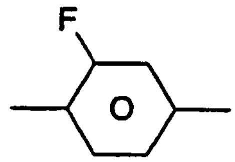 ,

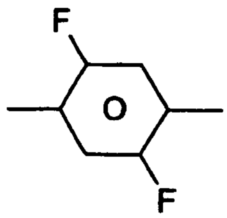 , 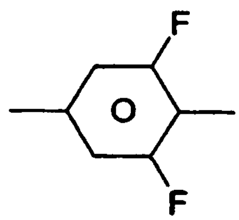 , 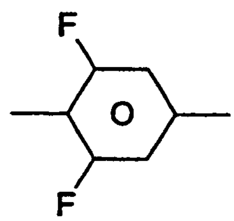 ,

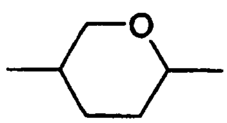 , 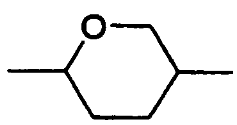 , 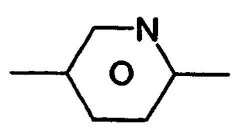 ,

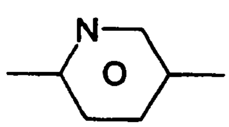 , 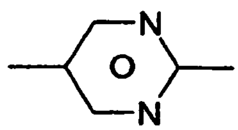 ; 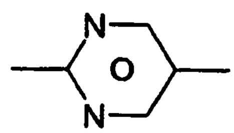

or

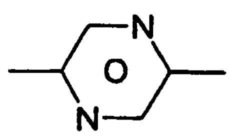 ;

K is 0, 1 or 2, preferably 0 or 1.

With regard to the dielectrically negative component, component D of the present invention, it is present optionally, preferably obligatorily, and consisting of dielectrically negative compounds, preferably comprising one or more compounds of formula IV

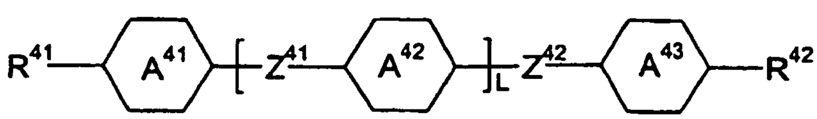 IV

wherein

$R^{41}$ and $R^{42}$ independently of each other have the meaning given for $R^3$ under formula III above;

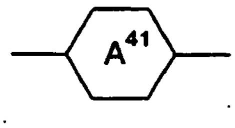

is

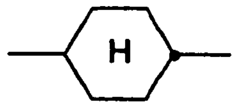

,

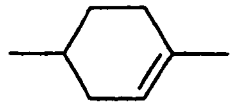

,

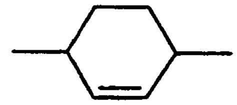

or

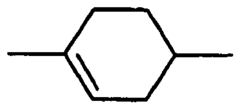

;

one of

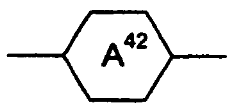

and

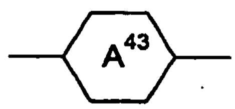

is

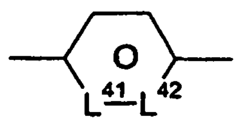

and the other one has, or the other two, independently of each other, have the same meaning, or one of the meanings given for

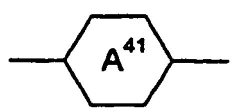

or are

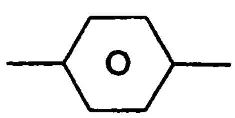

,

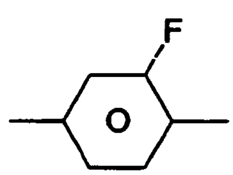

or

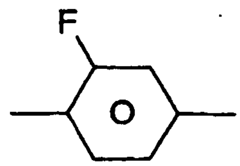

optionally one of

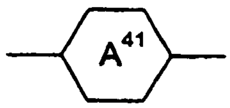 and 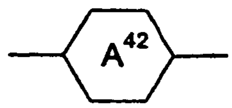, preferably 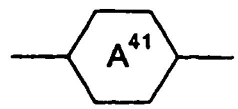

is,
or both are

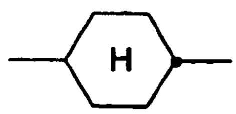 ;

| | |
|---|---|
| $L^{41}$ and $L^{42}$ | are, independently of each other, =C(-F)- or =N-, preferably at least one of them is =C(-F)- and, most preferably, both of them are =C(-F)-; |
| $Z^{41}$ and $Z^{42}$ | are, independently of each other, $-CH_2CH_2-$, -COO-, trans- CH=CH-, trans- -CF=CF-, $-CH_2O-$, $-CF_2O-$ or a single bond, preferably at least one of them is a single bond and most preferably both are a single bond; and |
| L | is 0 or 1 or 2, preferably 0 or 1. |

With regard to the dielectrically neutral component, component E being optionally, preferably obligatorily, present in the liquid crystal medium according to the invention said component is consisting of dielectrically neutral compounds, preferably comprising one or more compounds of formula V

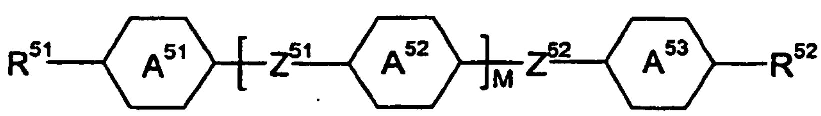 V

wherein

| | |
|---|---|
| $R^{51}$ and $R^{52}$ | , independently of each other, have the meaning given for $R^3$ under formula III above; |
| the rings $A^{51}$, $A^{52}$ and $A^{53}$ | , independently of each other, have the meaning given for ring $A^{31}$ under formula III above; |
| $Z^{51}$ and $Z^{52}$ | , independently of each other, have the meaning given for $Z^{31}$ under formula III above; and |
| M | is 0 or 1 or 2, preferably 0 or 1. |

Preferably the chiral component, component A comprises one or more compounds selected from the group of formulae Ia, Ib and I'-1, preferably of its sub-formulae I'a to I'c, preferably one or more compounds each of at least two different formulae selected from this group of formulae

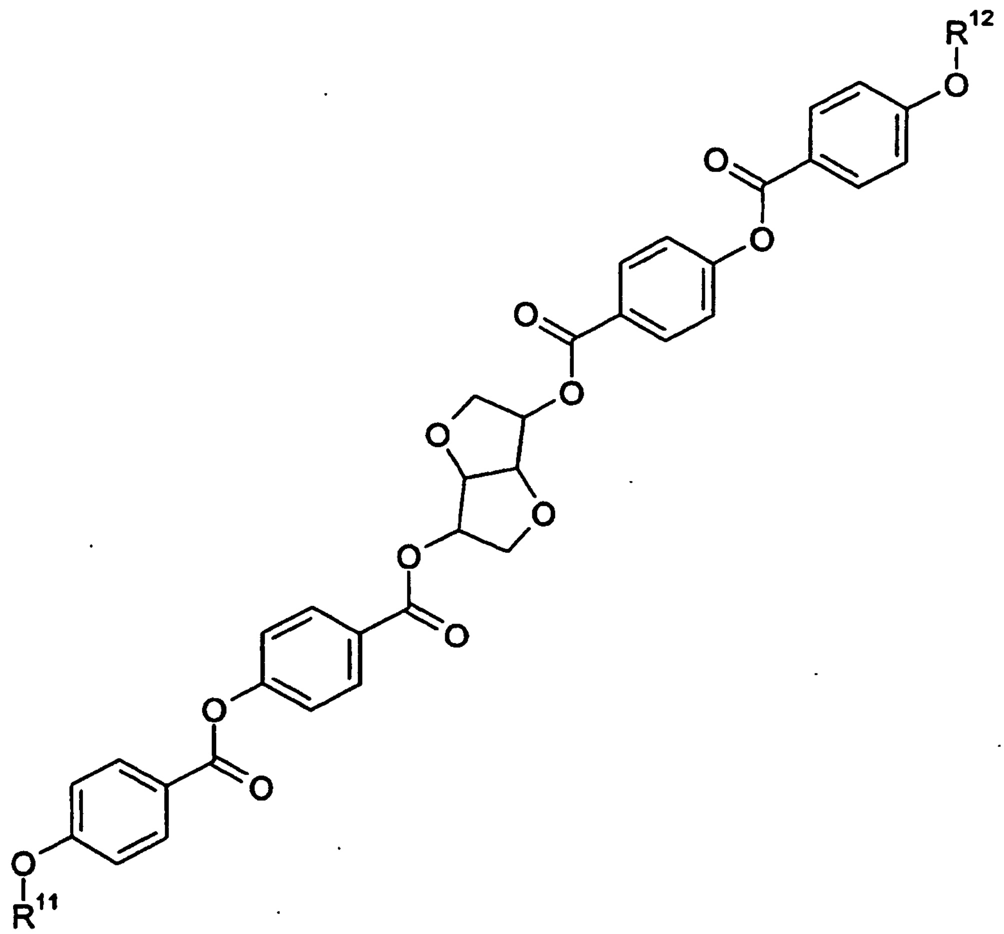

Ia

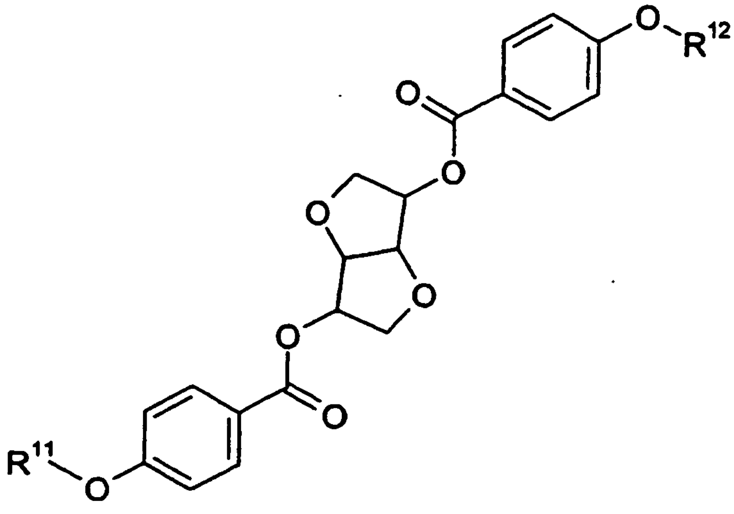

Ib

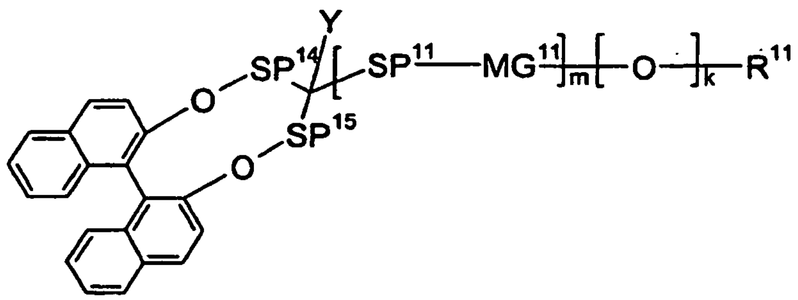

I'-1

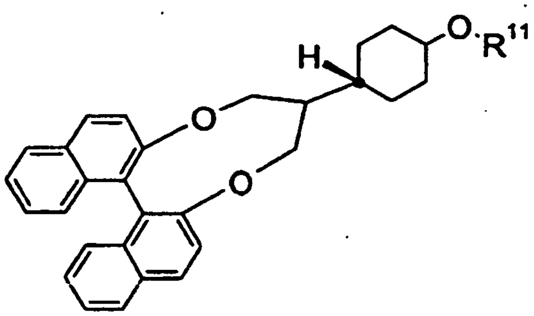

I'a

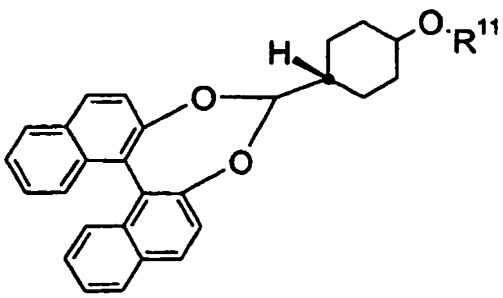

I'b

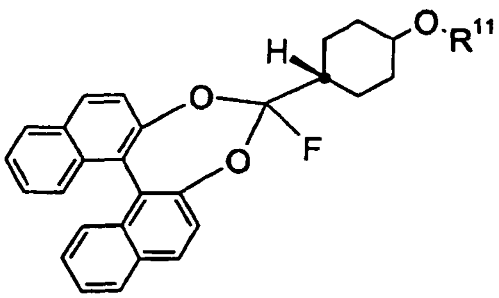

I'c

wherein the parameters have the respective meanings given under formula I above and preferably

$R^{11}$ and $R^{12}$ are, independently of each other, alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms.

Preferably the bimesogenic component, component B comprises one or more compounds of formula IIa, preferably one ore more compounds each of at least two different formulae selected from this group of formulae

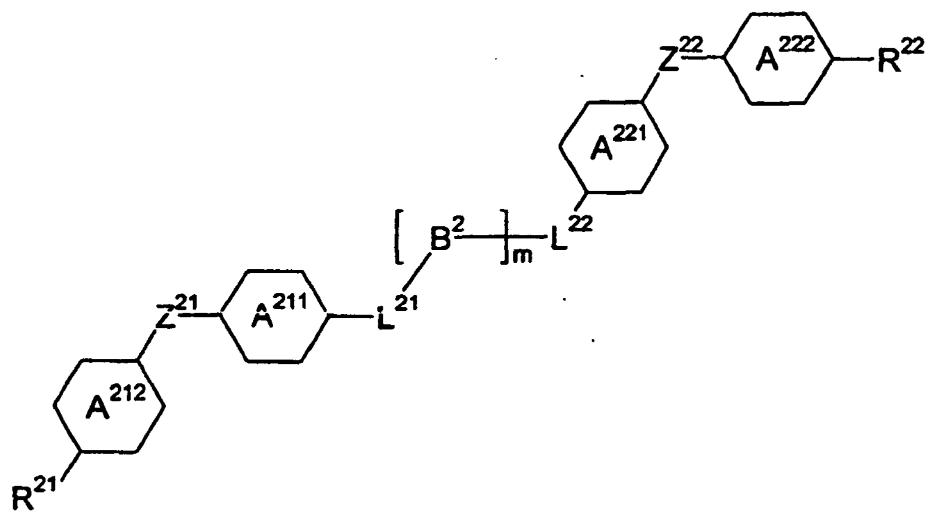

IIa

wherin

| | |
|---|---|
| $R^{21}$ and $R^{22}$ | , independently of each other have the meaning given under formula II above; |
| the rings $A^{211}$, $A^{212}$, $A^{221}$ and $A^{222}$, | independently of each other have the meaning given for ring $A^{31}$ under formula III above; |
| $Z^{21}$ and $Z^{22}$ | , independently of each other have the meaning given for $Z^{31}$ under formula III above; |
| $L^{21}$ and $L^{22}$ | , independently of each other have the same meaning as given for $X^{11}$ under formula I, I' or I" above; |
| $B^2$ | is $CH_2$, CFH, $CF_2$ or if present more than once any combination thereof, preferably $CH_2$; and |
| m | is an integer from 1 to 19, preferably from 3 to 17 and most preferably from 5 to 13; it is especially preferred that m is an odd number. |

Especially preferred are compounds of formulae IIa-1, IIa-2, IIa-3 and IIa-4:

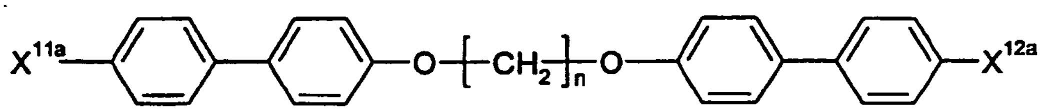

IIa-1

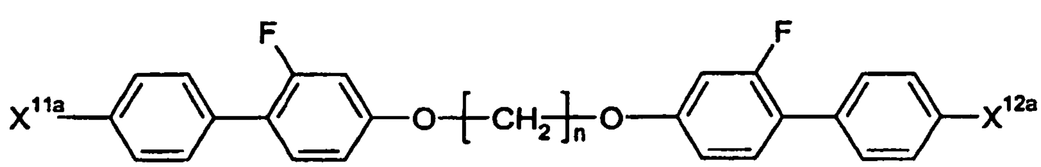

IIa-2

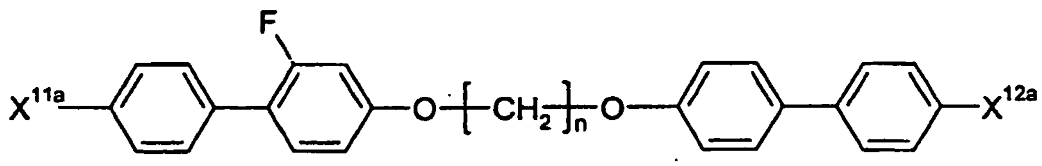

IIa-3

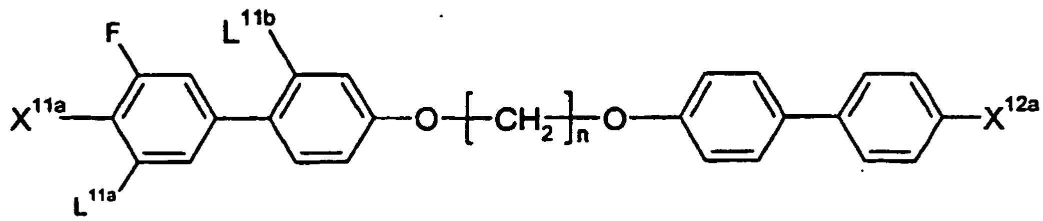

IIa-4

wherein

| | |
|---|---|
| $X^{11a}$ and $X^{12a}$, | independently of each other are CN, F, Cl or fluorinated alkyl or fluorinated alkoxy, each with 1 to 4 C-atoms, preferably CN, $CF_3$, F or Cl, more preferably CN, F or Cl, most preferably CN or F, whereby in formulae IIa-1 and IIa-2 $X^{11a}$ and $X^{12a}$ are different from each other; |
| $L^{11a}$ and $L^{11b}$ | independently of each other are H or F; and |
| n | is an odd integer in the range from 3 to 17, preferably from 5 to 13. |

Optionally the bimesogenic component, component B comprises one or more compounds selected from the group of formulae IIb-1 to IIb-4, which are almost identical with the respective formulae IIa-1 to IIa-4 given above, wherein the parameters have the meanings given above, which, however are different in that $X^{11a}$ and $X^{12a}$ are identical in formulae IIa-1 and IIa-2 and/or n is an even integer in the range from 2 to 18.

Preferably the bimesogenic component, component B comprises one or more compounds of formula IIc, preferably one ore more compounds each of at least two different formulae selected from the group of formulae IIc-1, IIc-2 and IIc-3

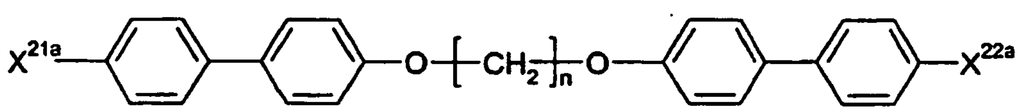

IIc-1

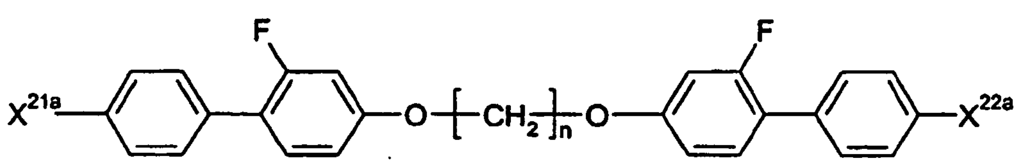

IIc-2

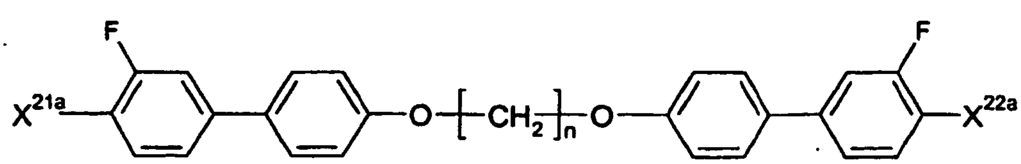

IIc-3

wherein

$X^{21a}$ and $X^{22a}$ , have the meaning given for $X^{11a}$ and $X^{12a}$ under formulae IIb-1 to IIb-3 above; and
n is an integer in the range from 2 to 18.

The dielectrically positive component, component C comprises one or more compounds selected from the group of formulae IIIb to IIIg, preferably one or more compounds each of at least two different formulae selected from this group of formulae

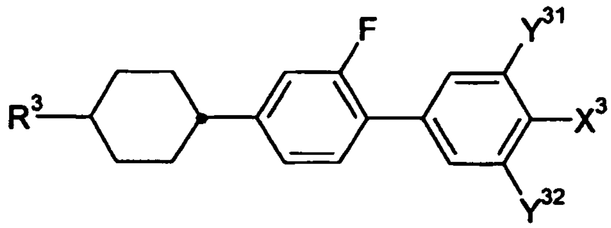

IIIb

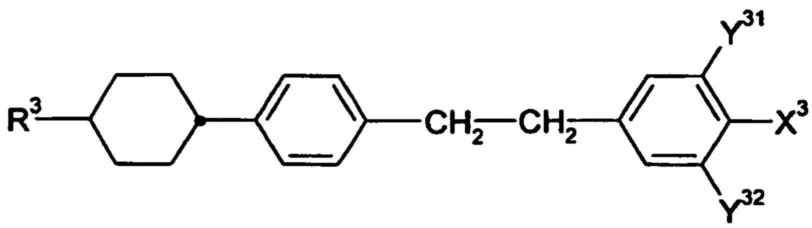

IIIc

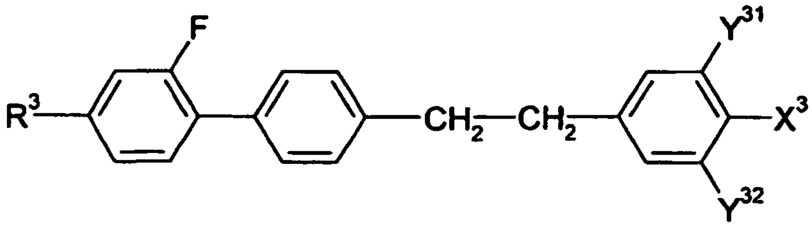

IIId

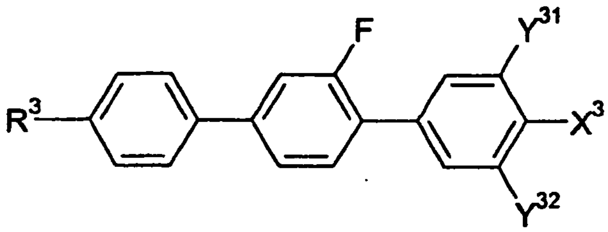

IIIe

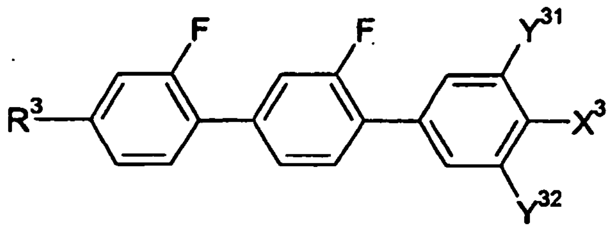

IIIf

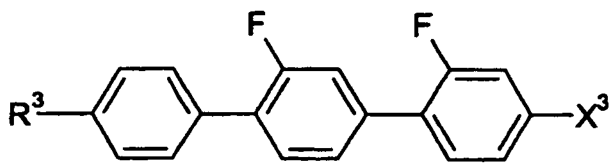

IIIg

wherein

| | |
|---|---|
| $R^3$ | is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms; |
| $X^3$ | is F, Cl or fluorinated alkyl or fluorinated alkoxy, each with 1 to 4 C-atoms, preferably $OCF_3$, $OCF_2H$, F or Cl, most preferably F; and |
| $Y^{31}$ and $Y^{32}$ | are, independently of each other H or F; |

wherein, optionally, two of the 6-membered rings shown directly linked, may be linked by a group selected from $-CH_2-CH_2-$, $-CF_2-CF_2-$, $-CF_2-O-$, $-O-CF_2-$ and -CO-O-, preferably $-CH_2-CH_2-$ and $-CF_2-O-$, most preferably $-CH_2-CH_2-$.

Further, the dielectrically positive component, component C optionally comprises one or more compounds of formula IIIh

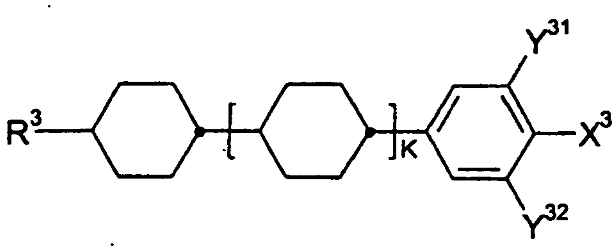

IIIh

wherein

| | |
|---|---|
| $R^3$ | is alkyl, alkoxy, fluorinated alkyl or fluorinated alkoxy with 1 to 7 C-atoms, alkenyl, alkenyloxy, alkoxyalkyl or fluorinated alkenyl with 2 to 7 C-atoms; |
| $X^3$ | is F, Cl or fluorinated alkyl or fluorinated alkoxy, each with 1 to 4 C-atoms, preferably $OCF_3$, $OCF_2H$, F or Cl, most preferably F; |
| $Y^{31}$ and $Y^{32}$ | are, independently of each other H or F; and |
| K | is 0, 1 or 2, preferably 0 or 1 and most preferably 1; |

wherein, optionally, two of the 6-membered rings may be linked by a group selected from $-CH_2-CH_2-$, $-CF_2-CF_2-$, $-CF_2-O-$, $-O-CF_2-$ and -CO-O-, preferably $-CH_2-CH_2-$ and $-CF_2-O-$, most preferably $-CH_2-CH_2-$.

The liqiud crystal mixtures according to the present invention preferably comprise a dielectrically negative component, component D. This component has a dielectrical anisotropy of -1.5 or less, preferably in the range from -1.5 to -8. Preferably it contains essentially and especially preferably consists entirely of dielectrically negative compounds. Preferably this component comprises one ore more dielectrically negative compounds selected from the group of of

formulae IVa to IVh

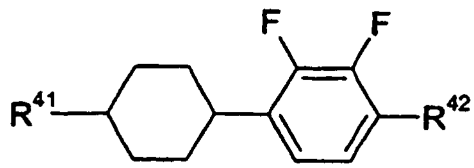

IVa

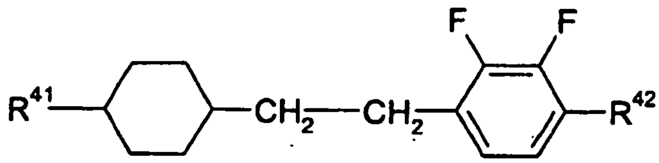

IVb

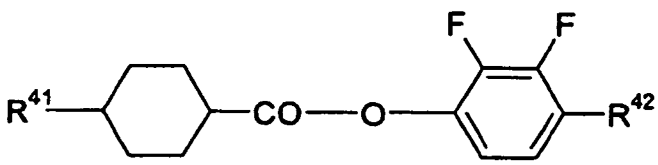

IVc

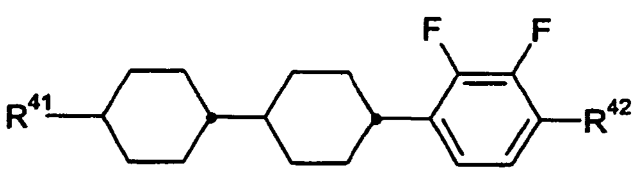

IVd

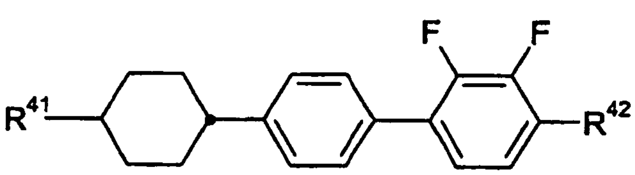

IVe

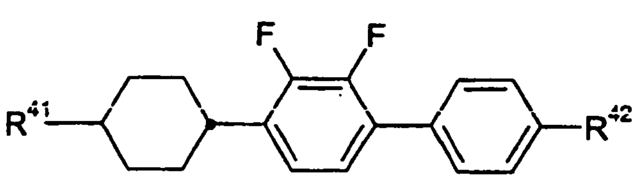

IVf

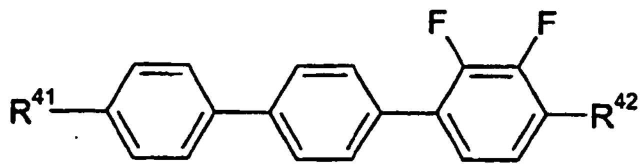

IVg

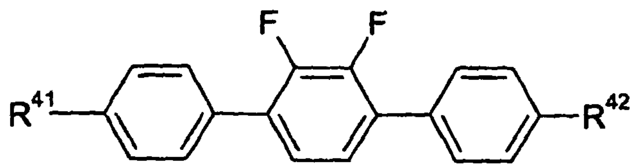

IVh

wherein

$R^{41}$ and $R^{42}$ have the respective meaning given under formula IV above.

The liqiud crystal mixtures according to the present invention preferably comprise a dielectrically neutral component, component E. This component has a dielectrical anisotropy in the range from -1.5 to +3.0. Preferably it contains essentially and especially preferably consists entirely of dielectrically neutral compounds. Preferably this component comprises one or more dielectrically neutral compounds selected from the group of of formulae Va to Vm

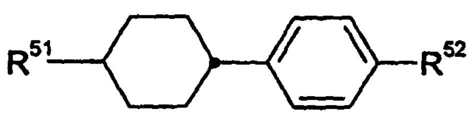

V a

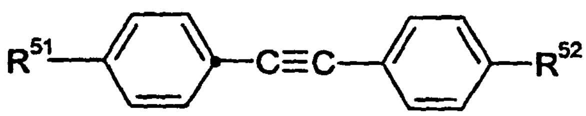

V b

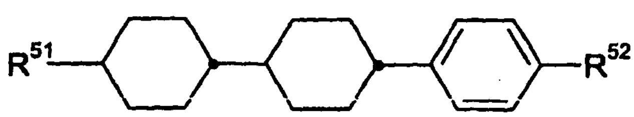

V c

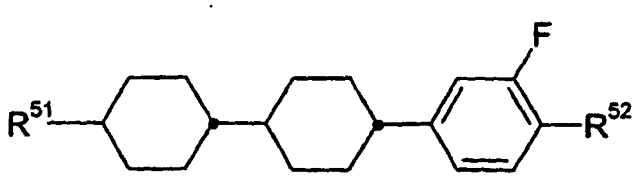

V d

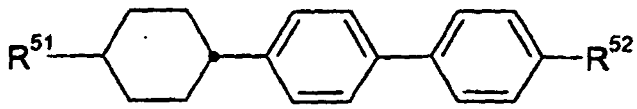

V e

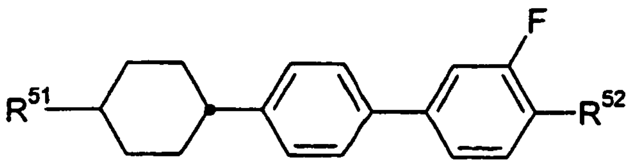

V f

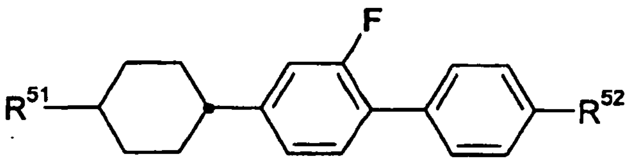

V g

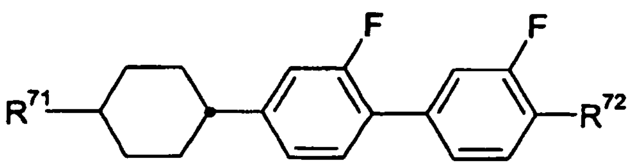

V h

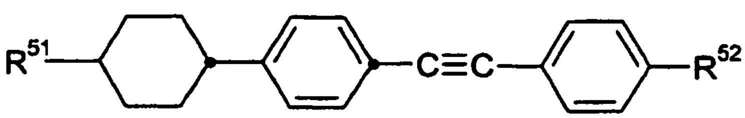

V i

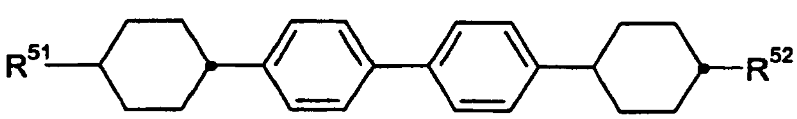

V j

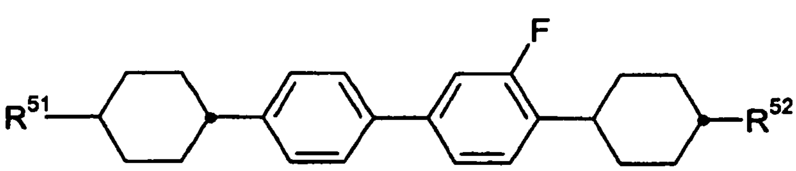

V k

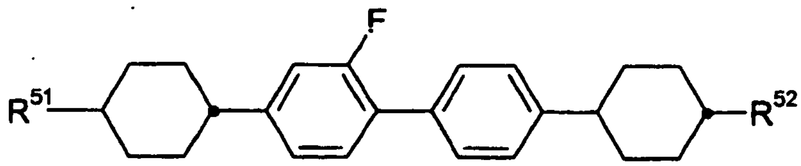

V l

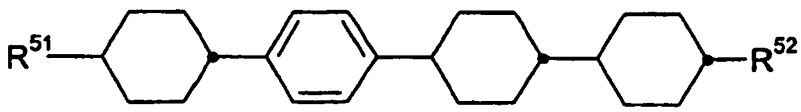

V m

wherein

$R^{51}$ and $R^{52}$ have the respective meaning given under formula V above.

1st embodiment

The improved liquid crystalline media according to the first preferred embodiment of the instant invention comprise a chiral component (component A), a bimesogenic component (component B), a dielectric positive component (component C), and a dielectric negative component (component D). In this embodiment the components A, C and D and the optional component E can be regarded as representing the host mixture for the bimesogenic component (component B).

2nd embodiment

In a second embodiment of the instant invention, which may be identical to the first embodiment or different from that, an improvement is achieved with respect to the angles of rotation and the flexoelectric properties for flexoelectric devices at ambient temperature. In this embodiment the liquid crystalline media comprise a chiral compound (component A), bimesogens (component B), positive dielectric anisotropy compounds (component C), optionally, preferably obligatorily, neutral conpounds (component E) and optionally negative dielectric anisotropy compounds (component D).

3rd embodiment

The third embodiment of the instant invention, which is independent from the two previous embodiments, but synergistically supplements them, resides in the chiral additive used. The chiral structure in liquid crystalline nematics for flexoelectric devices is achieved by adding chiral dopants. Significant improvement was obtained when binaphthol based compounds were used to replace isosorbides in terms of solubility and operating temperature range. To achieve a pitch suitable for flexoelectric devices, the chiral dopant concentration is preferably from 0.5% or more to 10% or less, more preferably from 1 % or more to 5% or less and most preferably from 1.5% or more to 4% or less and especially 2% or more.

Additional improvement is obtained in low temperature stability when binaphthol dopants, preferably of formula I'a, are used compared to isosorbide dopants. Preferably the compounds of formula I' are selected from the group of formulae I'a, I'b and I'c.

The chiral nematic phase extends to preferably less than 20°C or lesss, more preferably 15°C or less, most preferably 10°C or less, especially 5°C or less.

The present invention is also directed to a liquid crystal device comprising a liquid crystal medium according to the invention. Preferably, said device is an electro-optical display. In an especially preferred embodiment said device comprises a display that comprises

- a pair of substrates
  - each substrate bearing one or more electrodes; and

- one substrate bearing an orientation layer for planar alignment of liquid crystals or being otherwise treated for planar orientation of liquid crystals; and
- the other substrate bearing an orientation layer for homeotropic alignment of liquid crystals or being otherwise treated for homeotropic alignment of liquid crystals

and

- a liquid crystal material comprising the liquid crystal medium according to the invention and as set forth in any one of claims 1 to 6;

whereby said material is aligned in a uniformly lying helix structure with a helical pitch in the range from 100 nm to 800 nm, preferably from 200 nm to 600 nm and most preferably in the range from 250 nm to 500 nm.

In a preferred embodiment of the present invention the helical pitch is 500 nm or less, preferably lower than 400 nm, most preferably lower than 300 nm or less.

The liquid crystal material to be used in the liquid crystal device of the present invention preferably exhibits a blue phase. This allows that the orientation of said liquid crystal material in said uniformly lying helix structure is achieved by application of an alternating electrical field at a temperature at which the liquid crystal material is in the blue phase; by cooling said liquid crystal material being in the blue phase under the applied field finally the display is obtained in which the liquid crystal material is aligned in the uniformly lying helix structure as given above.

Preferably the liquid crystalline materials used in the displays according to the present invention have an induced chiral nematic phase.

The chiral nematic liquid crystalline media can also be aligned in the ULH texture upon application of an alternating electrical field by using an intrinsically non-symmetric system.

This non-symmetry can be easily introduced into the system in different ways. In one preferred embodiment the inner surfaces of the substrates of the display are treated to align liquid crystals in a hybrid alignment. This means that one surface induces planar alignment, also called homogeneous alignment, whereas the other surface induces homeotropic alignment. Obviously in both alignments the liquid crystals may exhibit a finite surface tilt angle.

These displays according to the present invention do not exhibit the drawbacks of the displays of the prior art or at least do exhibit them to a significantly lesser degree.

In a further preferred embodiment of the instant invention, which may be different from the embodiment described above, the alternating electrical field applied to align the liquid crystal material is preferably lower than the critical field for helix unwinding. For practical reasons it is preferably 12 V/μm or less and most preferably 4 V/μm or less.

In a further preferred embodiment of the instant invention, which may be different from the embodiments described above, a liquid crystal cell with surfaces treated for planar or for hybrid alignment, preferably for hybrid alignment, is used. In this embodiment the preferred starting condition for the orientation of the liquid crystal material is the Grandjean texture and the system preferably is at a temperature of 20°, more preferably 10° and most preferably 3° below the chiral ???. In this embodiment, which is independent from the two previous embodiments, the strength of the aligning field is applied, ramped up and / or increased gradually at the critical field only for the helix unwinding. This allows for true homeotropic alignment in case the liquid crystal material has a positive dielectric anisotropy, which is generally preferred in this application and especially in the instant embodiment. Then the aligning field is decreased gradually from its maximum value, preferably the critical field, until a good uniform lying helix alignment is achieved, over a defined time span. This time span preferably is in the range of 1 second to 2 hours, more preferably in the range of 1 second to 600 seconds and most preferably in the range from 1 second to 60 seconds. For reasons of productivity the time span should be as short as possible, while a sufficient time has to be allowed to ensure proper orientation.

A sweeping speed of 1.5 V/min has been found useful in most cases.

A sweeping speed per cell gap of 20 V/(μm·min) and in particular of 1.5 V/min has been found useful in most cases.

The chiral nematic phase of the liquid crystal materials preferably extends over a range of 10 degrees centigrade or more, preferably over a range of 20 degrees centigrade or more and most preferably over a range 30 degrees centigrade or more

The sequence of textures typically observed in a sample of an inventive medium upon application of an electric field is as follows:

**Scheeme 1: Phase sequence during orientation**

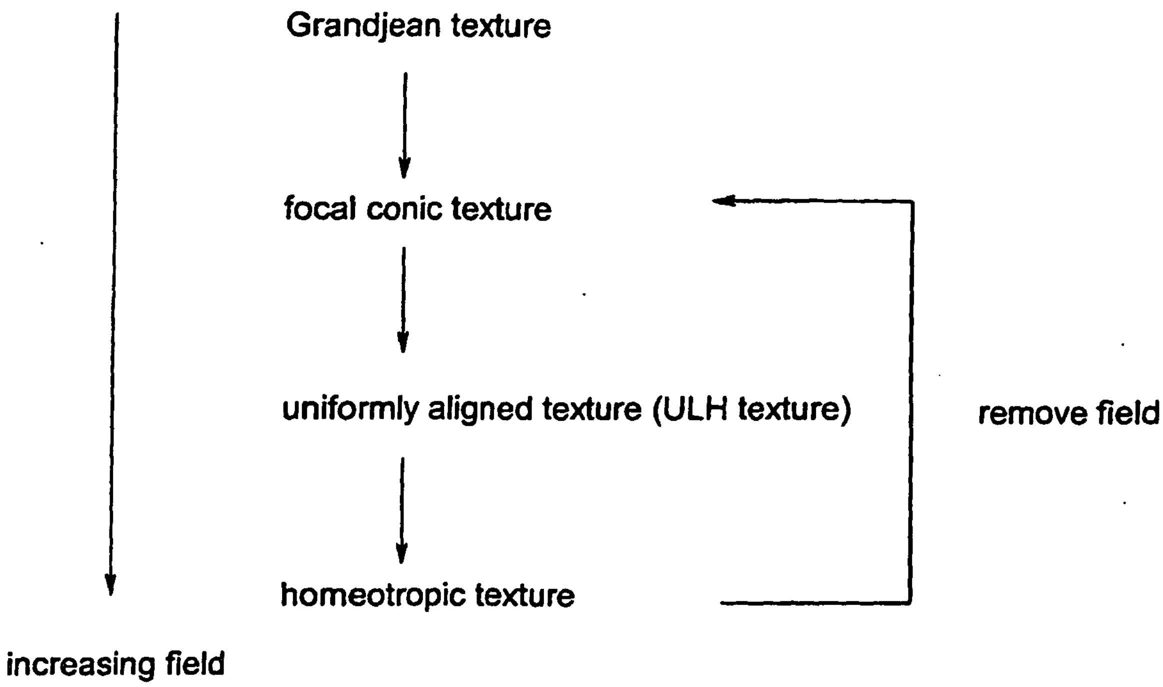


The liquid crystal base mixture preferably has an elastic constant $k_{11}$ of $1 \cdot 10^{-11}$ N or more and the flexoelectric mixture has an average flexoelectric coefficient $\overline{e}$ of $1 \cdot 10^{-11}$ C/m or more, preferably in the range from $1 \cdot 10^{-11}$ C/m to $1 \cdot 10^{-10}$ C/m.

Preferably the liquid crystalline media according to the instant invention are comprising, preferably predominantly consisting of and most preferably entirely consisting of compounds selected from the group of formulae I to V.

Comprising in this application means in the context of compositions that the entity referred to, e.g. the medium or the component, contains the component or components or the compound or compounds in question, preferably in a total concentration of 10 % or more and most preferably of 20 % or more.

Predominantly consisting, in this context, means that the entity referred to contains 80 % or more, preferably 90 % or more and most preferably 95 % or more of the component or components or of the compound or compounds in question.

Entirely consisting, in this context, means that the entity referred to contains 98 % or more, preferably 99 % or more and most preferably 100.0 % of the component or components or of the compound or compounds in question.

In a preferred embodiment the liquid crystalline media according to the instant invention contain a component A comprising, preferably predominantly consisting of and most preferably entirely consisting of compounds selected from the group of formulae I, I' and I".

In a further preferred embodiment the liquid crystal media contain a liquid crystal component B, which is preferably predominantly consisting of and most preferably entirely consisting of compounds of formula II, preferably IIa.

In a further preferred embodiment, which may be identical to the previous preferred embodiment or different from it, the liquid crystal medium contains a liquid crystal component E, which is preferably predominantly consisting of and most preferably entirely consisting of compounds of formula V.

This component E may be present, and preferably is present, besides components C and D.

Also other mesogenic, as well as nonmesogenic, compounds, which are not explicitly mentioned above, can optionally and beneficiously be used in the media according to the instant invention. Such compounds are known to the expert in the field.

Component A preferably is used in a concentration from 0.1% to 10 %, preferably from 0.5 % to 8 %, more preferably from 0.5 % to 6 % and most preferably from 0.5 % to 4 %, preferably up to to 3 % of the total mixture.

Component B preferably is used in a concentration from 0.1 % to 97 %, preferably from 1 % to 80 %, more preferably from 10 % to 70 % and most preferably from 10 % to 60 % of the total mixture.

Component C preferably is used in a concentration from 0 % to 97 %, preferably from 1 % to 80 %, more

preferably from 1 % to 50 % and most preferably from 5 % to 50 % of the total mixture.

Component D preferably is used in a concentration from 0 % to 97 %, preferably from 0 % to 90 %, more preferably from 0 % to 70 % and most preferably from 0 % to 60 % of the total mixture.

Component E preferably is used in a concentration from 0 % to 97 %, preferably from 1 % to 80 %, more preferably from 1 % to 50 % and most preferably from 5 % to 30 % of the total mixture.

Optionally, the inventive media can comprise further liquid crystal compounds in order to adjust the physical properties. Such compounds are known to the expert. Their concentration in the media according to the instant invention is preferably 0 % to 30 %, more preferably 0 % to 20 % and most preferably 0.5 % to 15 %.

Preferably the liquid crystal medium contains 50 % to 100 %, more preferably 70 % to 100 % and most preferably 80 % to 100 % and in particular 90 % to 100 % totally of components A, B, C, D and E, which contain, preferably predominantly consist of and most preferably entirely consist of one or more of compounds of formulae I to V, respectively.

The liquid crystal media according to the instant invention are characterized by a clearing point of 70 °C or more, preferably of 80 °C or more and in particular of 87 °C or more.

The $\Delta n$ of the liquid crystal media according to the instant invention is 0.050 or more, preferably in the range of 0.060 to 0.200, more preferably in the range of 0.060 to 0.170, most preferably in the range of 0.080 to 0.150 and in particular in the range of 0.080 to 0.138.

The $\Delta\varepsilon$, at 1 kHz and 20 °C, of the liquid crystal media according to the invention is 0 or more, preferably 0.1 or more, most preferably 0.5 or more and in particular 0.6 or more. It is, however, preferably 7.0 or less, more preferably 5.0 or less and most preferably 4.0 or less.

Preferably the nematic phase of the inventive media extends at least from 0°C to 70°C, more preferably at least from -20 °C to 80 °C, more preferably at least from -20 °C to 90 °C, most preferably at least from -30°C to 90 °C and in particular at least from -30°C to 100 °C, wherein at least means that preferably the lower limit is under cut, wherein the upper limit is surpassed.

In the present application the term dielectrically positive compounds describes compounds with $\Delta\varepsilon > 3.0$, dielectrically neutral compounds are compounds with $-1.5 \leq \Delta\varepsilon \leq 3.0$ and dielectrically negative compounds are compounds with $\Delta\varepsilon < -1.5$. The same holds for components. $\Delta\varepsilon$ is determined at 1 kHz and 20 °C. The dielectrical anisotropies of the compounds is determined from the results of a solution of 10 % of the individual compounds in a nematic host mixture. The capacities of these test mixtures are determined both in a cell with homeotropic and with homogeneous alignment. The cell gap of both types of cells is approximately 10 µm. The voltage applied is a rectangular wave with a frequency of 1 kHz and a root mean square value typically of 0.5 V to 1.0 V, however, it is always selected to be below the capacitive threshold of the respective test mixture.

For dielectrically positive compounds the mixture ZLI-4792 and for dielectrically neutral, as well as for dielectrically negative compounds, the mixture ZLI-3086, both of Merck KGaA, Germany are used as host mixture, respectively. The dielectric permittivities of the compounds are determined from the change of the respective values of the host mixture upon addition of the compounds of interest and are extrapolated to a concentration of the compounds of interest of 100 %. Components having a nematic phase at the measurement temperature of 20 °C are measured as such, all others are treated like compounds.

The term threshold voltage refers in the instant application to the optical threshold and is given for 10 % relative contrast ($V_{10}$) and the term saturation voltage refers to the optical saturation and is given for 90 % relative contrast ($V_{90}$) both, if not explicitly stated otherwise. The capacitive threshold voltage ($V_0$, also called Freedericksz-threshold $V_{Fr}$) is only used if explicitly mentioned.

The ranges of parameters given in this application are all including the limiting values, unless explicitly stated otherwise.

Throughout this application, unless explicitly stated otherwise, all concentrations are given in mass percent and relate to the respective complete mixture, all temperatures are given in degrees centigrade (Celsius) and all differences of temperatures in degrees centigrade. All physical properties have been and are determined according to "Merck Liquid Crystals, Physical Properties of Liquid Crystals", Status Nov. 1997, Merck KGaA, Germany and are given for a temperature of 20 °C, unless explicitly stated otherwise. The optical anisotropy ($\Delta n$) is determined at a wavelength of 589.3 nm. The dielectric anisotropy ($\Delta\varepsilon$) is determined at a frequency of 1 kHz. The threshold voltages, as well as all other electro-optical properties have been determined with test cells prepared at Merck KGaA, Germany. The test cells for the determination of $\Delta\varepsilon$ had a cell gap of 22 µm. The electrode was a circular ITO electrode with an area of 1.13 $cm^2$ and a guard ring. The orientation layers were lecithin for homeotropic orientation ($\varepsilon||$) and polyimide AL-1054 from Japan Synthetic Rubber for homogeneuous orientation ($\varepsilon_{\perp}$). The capacities were determined with a frequency response analyser Solatron 1260 using a sine wave with a voltage of 0.3 $V_{rms}$. The light used in the electro-optical measurements was white light. The experimental set up used, consisted of a polarising Olympus microscope equipped with a fast photodiode, whose output signal was monitored on an oscilloscope. External electric fields were applied.

The liquid crystal media according to the present invention can contain further additives and chiral dopants in usual concentrations. The total concentration of these further constituents is in the range of 0 % to 10 %, preferably 0.1

% to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application.

The inventive liquid crystal media according to the present invention consist of several compounds, preferably of 3 to 30, more preferably of 8 to 20 and most preferably of 10 to 16 compounds.

These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e. g. using so called pre-mixtures, which can be e. g. homologous or eutectic mixtures of compounds or using so called multi-bottle-systems, the constituents of which are ready to use mixtures themselves.

By addition of suitable additives, the liquid crystal media according to the instant invention can be modified in such a way, that they are usable in all known types of liquid crystal displays, either using the liquid crystal media as such, like TN-, TN-AMD, ECB-AMD, VAN-AMD, IPS and OCB LCDs and in particular in composite systems, like PDLC, NCAP, PN LCDs and especially in projectoin type TFT displays.

The orientation of the liquid crystal media according to the present invention in the inventive cells is typically achieved by treating the major inner surfaces of the cell opposing each other with an aligning means for homogeneous alignment and application of an electrical field to the foilled cell. The means for homeotropic orientation is an inorganic layer with a preferred direction, like e.g. obliquely evaporated $SiO_x$ or an organic layer, typically a polymeric layer, having a preferred direction, like an uniderectionally rubbed polyimide or polyamide film.

The melting point T(C,N), the transition from the smectic (S) to the nematic (N) phase T(S,N) and the clearing point T (N,I) of the liquid crystals are given in degrees centigrade.

In the present application and especially in the following examples, the structures of the liquid crystal compounds are represented by abbreviations also called acronyms. The transformation of the abbreviations into the corresponding structures is straight forward according to the following two tables A and B. All groups $C_nH_{2n+1}$ and $C_mH_{2m+1}$ are straight chain alkyl groups with n respectively m C-atoms. The interpretation of table B is self evident. Table A does only list the abbreviations for the cores of the structures. The individual compounds are denoted by the abbreviation of the core followed by a hyphen and a code specifying the substituents $R^1$, $R^2$, $L^1$ and $L^2$ as follows:

| Code for $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | F | H |
| nN.F.F | $C_nH_{2n+1}$ | CN | F | F |
| nF | $C_nH_{2n+1}$ | F | H | H |
| nF.F | $C_nH_{2n+1}$ | F | F | H |
| nF.F.F | $C_nH_{2n+1}$ | F | F | F |
| nOF | $OC_nH_{2n+1}$ | F | H | H |
| nCl | $C_nH_{2n+1}$ | Cl | H | H |
| nCl.F | $C_nH_{2n+1}$ | Cl | F | H |
| nCl.F.F | $C_nH_{2n+1}$ | Cl | F | F |
| $nCF_3$ | $C_nH_{2n+1}$ | $CF_3$ | H | H |
| $nCF_3$.F | $C_nH_{2n+1}$ | $CF_3$ | F | H |
| $nCF_3$.F.F | $C_nH_{2n+1}$ | $CF_3$ | F | F |
| $nOCF_3$ | $C_nH_{2n+1}$ | $OCF_3$ | H | H |
| $nOCF_3$.F | $C_nH_{2n+1}$ | $OCF_3$ | F | H |
| $nOCF_3$.F.F | $C_nH_{2n+1}$ | $OCF_3$ | F | F |
| $nOCF_2$ | $C_nH_{2n+1}$ | $OCHF_2$ | H | H |
| $nOCF_2$.F | $C_nH_{2n+1}$ | $OCHF_2$ | F | H |
| $nOCF_2$.F.F | $C_nH_{2n+1}$ | $OCHF_2$ | F | F |
| nS | $C_nH_{2n+1}$ | NCS | H | H |
| nS.F | $C_nH_{2n+1}$ | NCS | F | H |

Table continued

| Code for $R^1$, $R^2$, $L^1$, $L^2$ | $R^1$ | $R^2$ | $L^1$ | $L^2$ |
|---|---|---|---|---|
| nS.F.F | $C_nH_{2n+1}$ | NCS | F | F |
| rVsN | $C_rH_{2r+1}$-CH=CH-$C_sH_{2s}$- | CN | H | H |
| rEsN | $C_rH_{2r+1}$-O-$C_sH_{2s}$- | CN | H | H |
| nAm | $C_nH_{2n+1}$ | $COOC_mH_{2m+1}$ | H | H |

**Table A:**

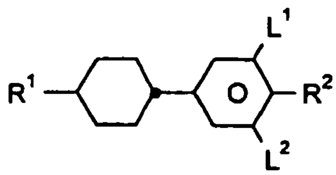

PCH

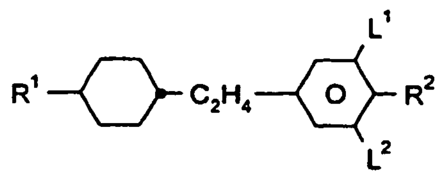

EPCH

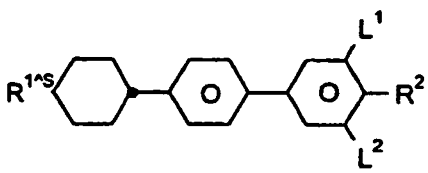

BCH

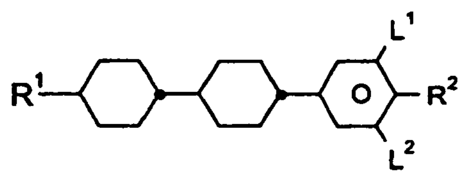

CCP

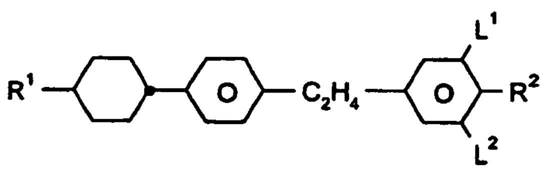

EBCH

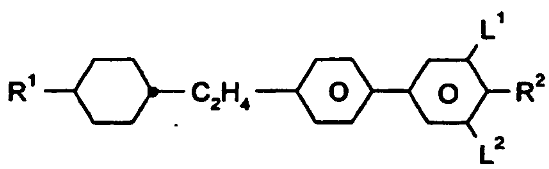

BECH

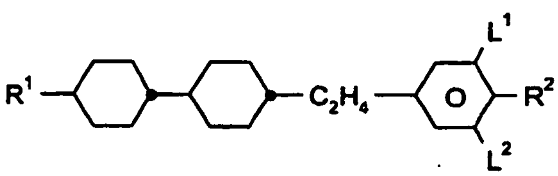

ECCP

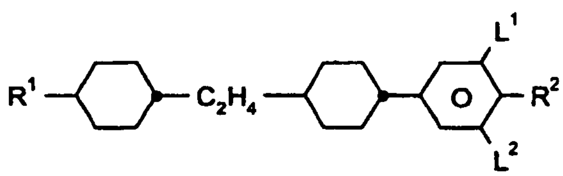

CECP

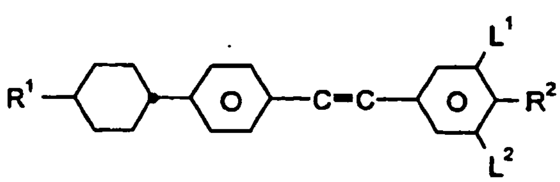

CPTP

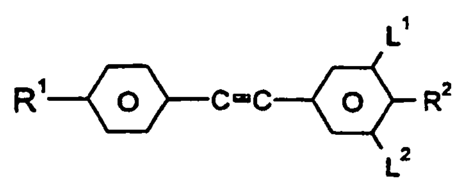

PTP

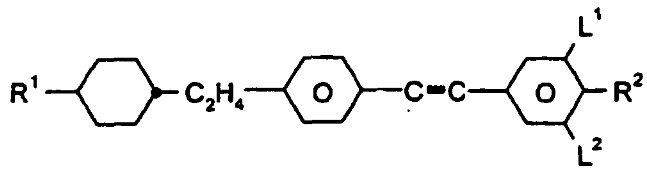

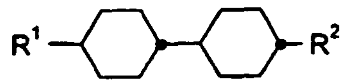

**CEPTP**

**CCH**

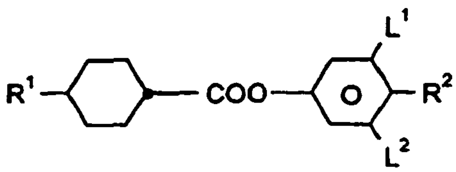

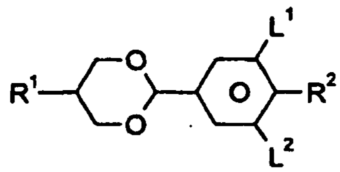

**D**

**PDX**

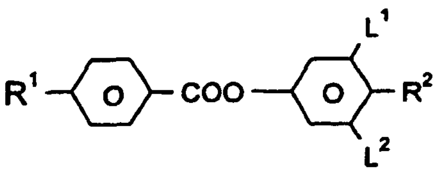

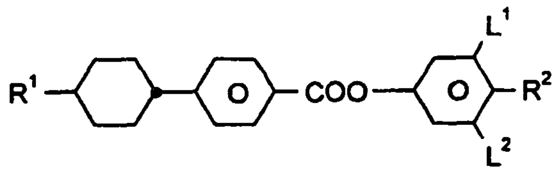

**ME**

**HP**

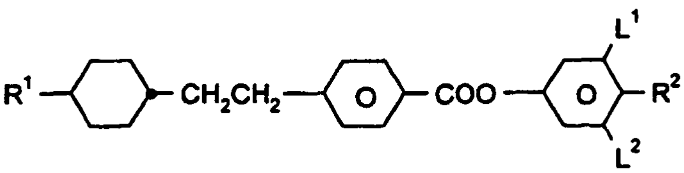

**EHP**

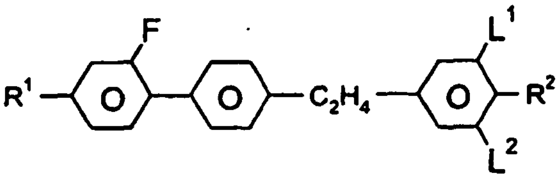

**FET**

**Table B:**

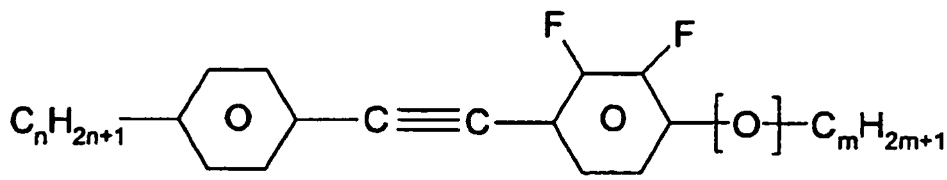

**PTP-n(O)mFF**

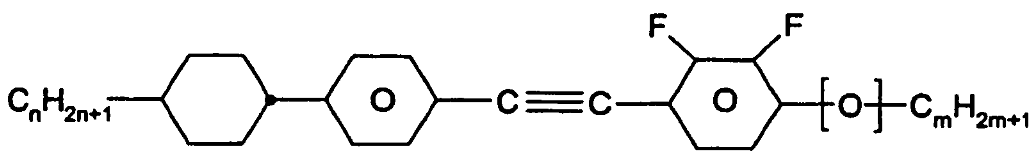

**CPTP-n(O)mFF**

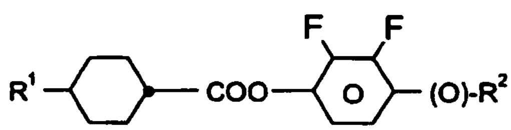

**D-n(O)mFF**

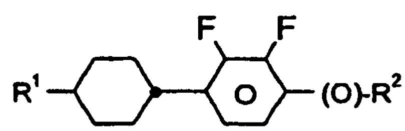

**PCH-n(O)mFF**

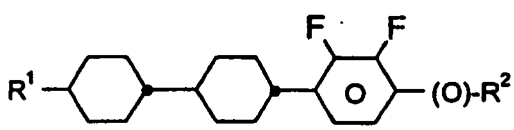

**CCP-n(O)mFF**

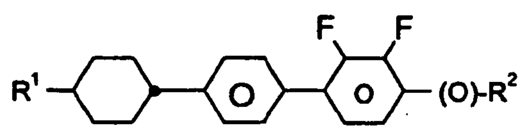

**BCH-n(O)mFF**

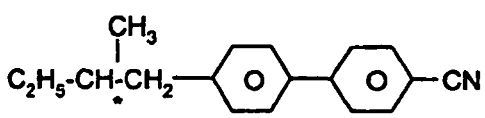

**CB15**

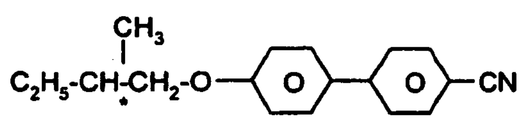

**C15**

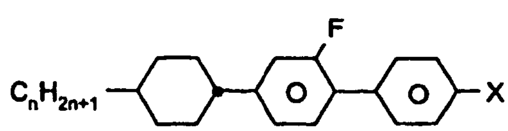

**CGP-n-X**

(X = F, Cl, OCF3)

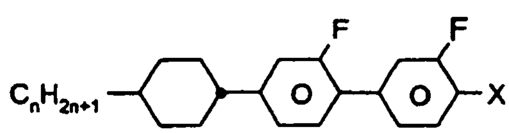

**CGG-n.FX**

(X = F, Cl, OCF3)

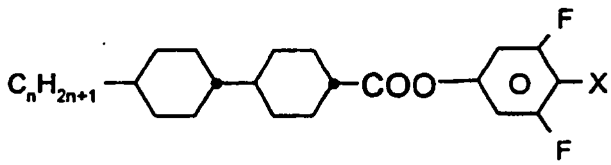

**CCZU-n-X**

(X = F, Cl, OCF3)

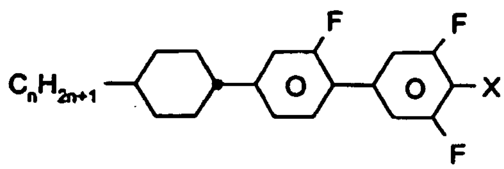

**CGU-n-X**

(X = F, Cl, OCF3)

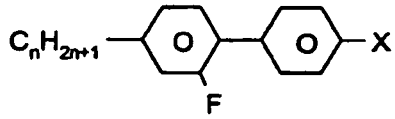

**GP-n-X**

(X = F, Cl, OCF3)

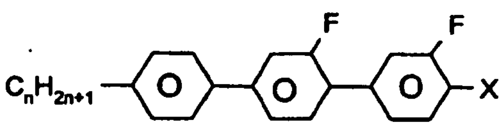

**PGG-n-X**

(X = F, Cl, OCF3)

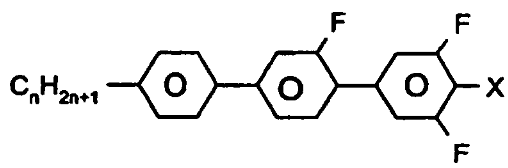

**PGU-n-X**

(X = F, Cl, OCF3)

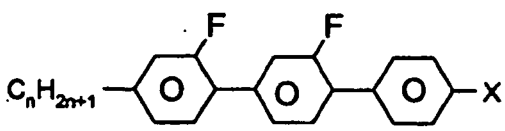

**GGP-n-X**

(X = F, Cl, OCF3)

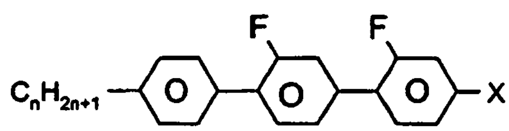

**PGIGI-n-X**

(X = F, Cl, OCF3)

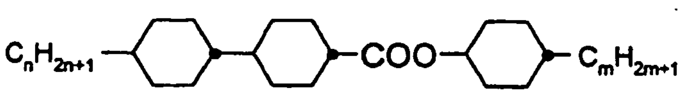

**Inm**

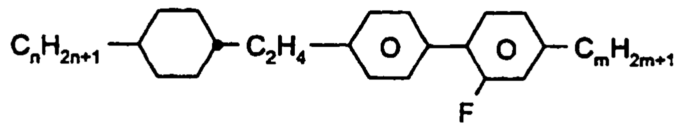

Inm

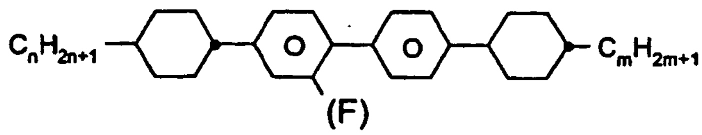

CBC-nm(F)

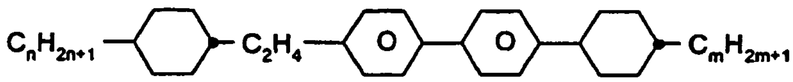

ECBC-nm

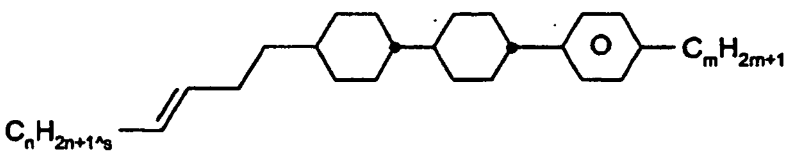

CCP-nV2-m

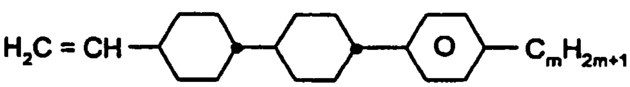

CCP-V-m

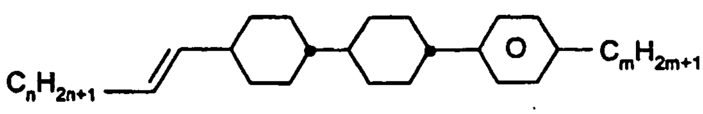

CCP-nV-m

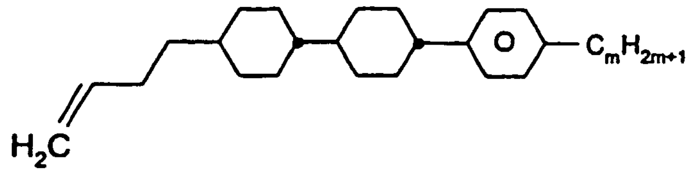

**CCP-V2-m**

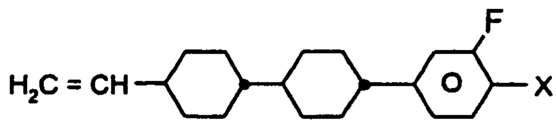

**CCG-V-X**

(X = F, Cl, OCF3)

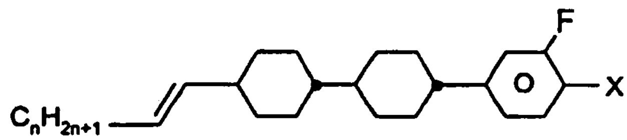

**CCG-nV-X**

(X = F, Cl, OCF3)

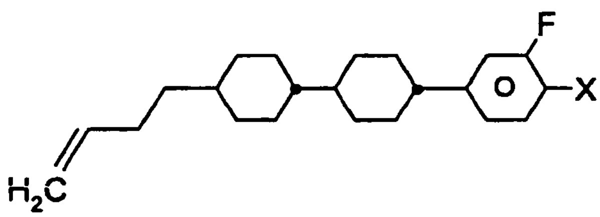

**CCP-V2-X**

(X = F, Cl, OCF3)

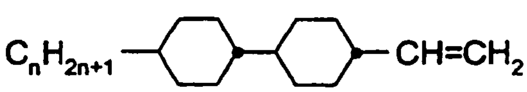

**CC-n-V**

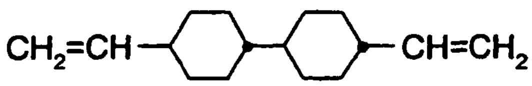

**CC-V-V**

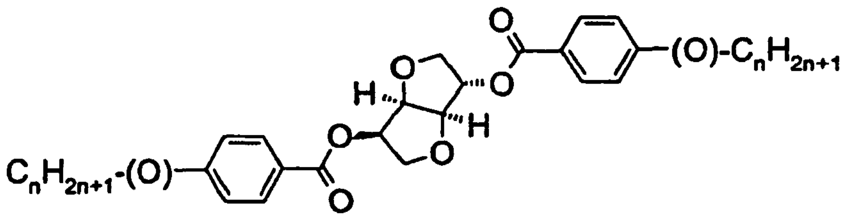

**(n(O)-PZ)$_2$X***

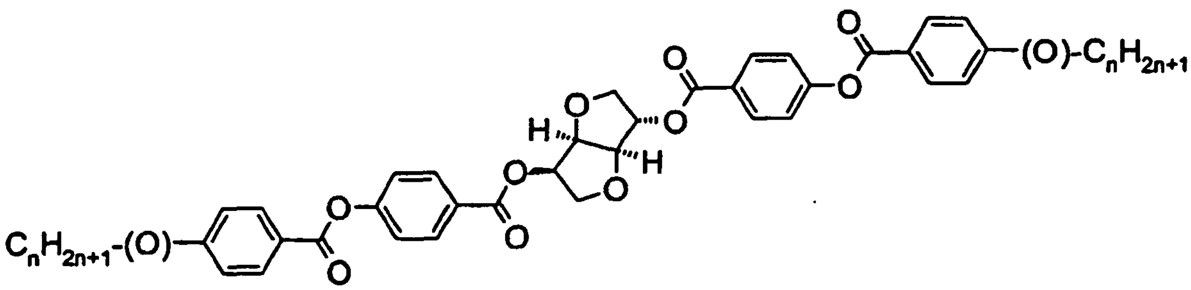

**(n(O)-PZPZ)$_2$X***

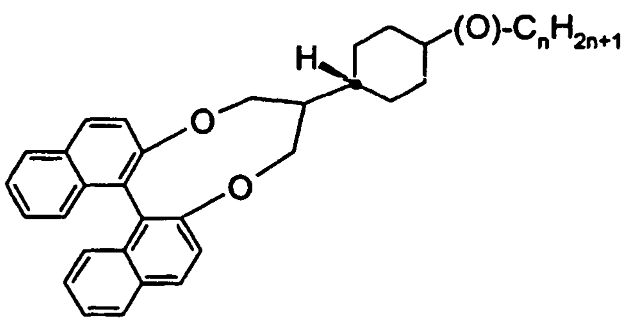

**n(O)-C1(1O)$_2$N***

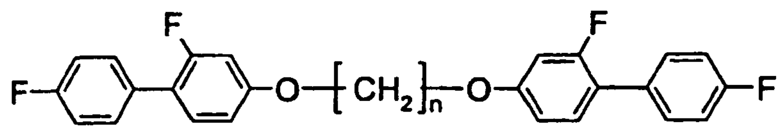

**n(OGP-F)$_2$**

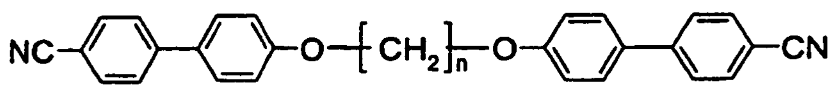

**n(OPP-N)$_2$**

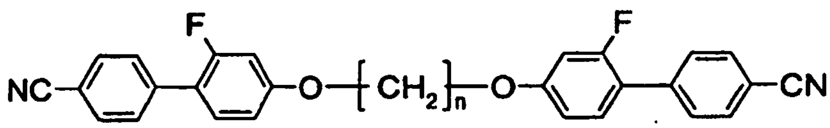

**n(OGP-N)$_2$**

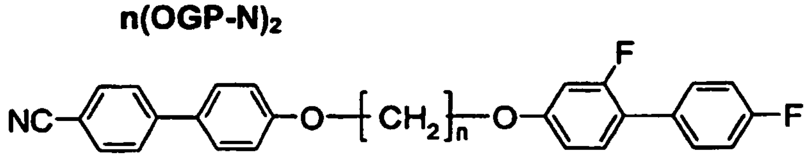

**n (OGP-F) (OPP-N)**

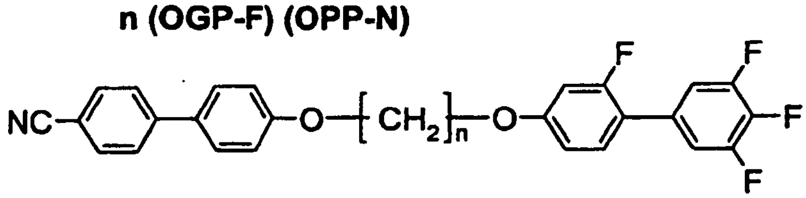

**n (OGU-F) (OPP-N)**

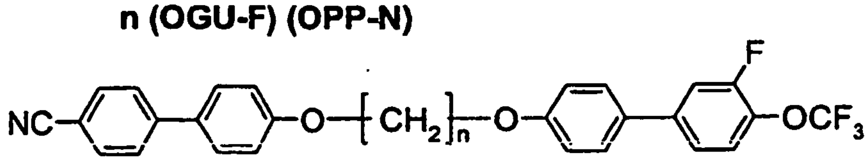

**n (OPG-OT) (OPP-N)**

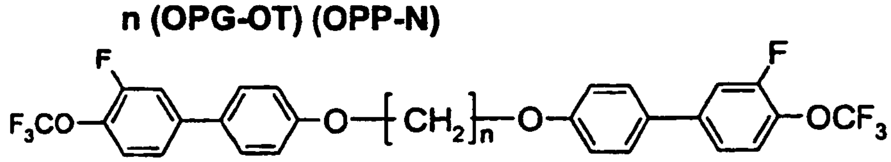

**n (OPG-OT)$_2$**

The liquid crystal media according to the instant invention do contain preferably

- three or more, preferably five or more compounds, preferably of different formulae, selected from the group of compounds of formulae of tables A and B and/or
- one, two, three or more, preferably three, four or more compounds, preferably of different formulae, selected from the group of compounds of formulae of table A and/or
- one , two, three or more, preferably two, three or more compounds, preferably of different formulae, selected from the group of compounds of formulae of table B.

Example 1

Nine nematic liquid-crystal host mixtures A-0 to I-0 of the following compositions are prepared and investigated.

| Composition of Mixture A-0 | | |
|---|---|---|
| Compound # | Abbreviation | Conc. /Mass-% |
| 1 | BCH-3F.F | 12.0 |
| 2 | BCH-5F.F | 10.0 |
| 3 | ECCP-30CF3 | 5.0 |
| 4 | ECCP-50CF3 | 5.0 |
| 5 | CBC-33F | 2.0 |
| 6 | CBC-53F | 2.0 |
| 7 | CBC-55F | 2.0 |
| 8 | PCH-6F | 8.0 |
| 9 | PCH-7F | 6.0 |
| 10 | CCP-20CF3 | 8.0 |
| 11 | CCP-30CF3 | 12.0 |
| 12 | CCP-40CF3 | 7.0 |
| 13 | CCP-50CF3 | 11.0 |
| 14 | PCH-5F | 10.0 |
| Σ | | 100.0 |

| Composition of Mixture B-0 | | |
|---|---|---|
| Compound # | Abbreviation | Conc. /Mass-% |
| 1 | CCP-2F.F.F | 12.0 |
| 2 | CCP-3F.F.F | 12.0 |
| 3 | CCP-30CF3.F | 3.0 |
| 4 | CCP-20CF3 | 7.0 |
| 5 | CCP-30CF3 | 8.0 |
| 6 | CCP-50CF3 | 7.0 |
| 7 | CGU-2-F | 8.0 |
| 8 | CGU-3-F | 9.0 |
| 9 | CGU-5-F | 6.0 |
| 10 | CCZU-2-F | 5.5 |
| 11 | CCZU-3-F | 14.0 |
| 12 | CCZU-5-F | 5.5 |
| 13 | CBC-33F | 3.0 |
| Σ | | 100.0 |

| Composition of Mixture C-0 | | |
|---|---|---|
| Compound # | Abbreviation | Conc. /Mass-% |
| 1 | D-302FF | 10.0 |
| 2 | D-502FF | 10.0 |
| 3 | CCP-302FF | 5.0 |

Table continued

| Composition of Mixture C-0 | | |
|---|---|---|
| Compound # | Abbreviation | Conc. /Mass-% |
| 4 | CCP-502FF | 6.0 |
| 5 | PCH-502FF | 12.0 |
| 6 | CCP-21 FF | 6.0 |
| 7 | CCP-31 FF | 6.0 |
| 8 | CH-43 | 7.0 |
| 9 | PTP-201 | 6.0 |
| 10 | PTP-301 | 6.0 |
| 11 | CPTP-301 | 4.0 |
| 12 | CPTP-303 | 4.0 |
| 13 | CBC-53F | 3.0 |
| 14 | PCH-3 | 8.0 |
| 15 | PDX-5 | 7.0 |
| Σ | | 100.0 |

| Composition of Mixture D-0 | | |
|---|---|---|
| Compound # | Abbreviation | Conc. /Mass-% |
| 1 | $7(OGP\text{-}F)_2$ | 5.0 |
| 2 | $9(OGP\text{-}F)_2$ | 20.0 |
| 3 | CCZU-3-F | 7.0 |
| 4 | CCP-30CF3 | 7.0 |
| 5 | CCP-50CF3 | 6.0 |
| 6 | CCG-V-F | 10.0 |
| 7 | D-302 | 8.0 |
| 8 | CC-3-V1 | 11.0 |
| 9 | CC-5-V | 8.0 |
| 10 | CCP-V-1 | 8.0 |
| 11 | PTP-102 | 3.0 |
| 12 | PTP-301 | 4.0 |
| Σ | PTP-302 | 3.0 |
| | | 100.0 |

| Composition of Mixture E-0 | | |
|---|---|---|
| Compound # | Abbreviation | Conc. /Mass-% |
| 1 | $7(OGP\text{-}F)_2$ | 11.0 |
| 2 | $9(OGP\text{-}F)_2$ | 44.0 |
| 3 | CCZU-3-F | 7.0 |
| 4 | CCP-30CF3 | 7.0 |
| 5 | CCP-50CF3 | 6.0 |
| 6 | D-302 | 7.0 |
| 7 | CC-5-V | 12.0 |

Table continued

| Composition of Mixture E-0 | | |
|---|---|---|
| Compound # | Abbreviation | Conc. /Mass-% |
| 8 | CBC-33F | 3.0 |
| 9 | CBC-53F | 3.0 |
| Σ | | 100.0 |

| Composition of Mixture F-0 | | |
|---|---|---|
| Compound # | Abbreviation | Conc. /Mass-% |
| 1 | $7(OGP\text{-}F)_2$ | 34.3 |
| 2 | $9(OGP\text{-}F)_2$ | 34.3 |
| 3 | 7(OGU-F)(OPP-N) | 14.7 |
| 4 | 9(OGU-F)(OPP-N) | 14.7 |
| Σ | | 100.0 |

| Composition of Mixture G-0 | | |
|---|---|---|
| Compound # | Abbreviation | Conc. /Mass-% |
| 1 | 7(OGU-F)(OPP-N) | 4.9 |
| 2 | 9(OGU-F)(OPP-N) | 4.9 |
| 3 | Mixture A-0 | 88.2 |
| Σ | | 100.0 |

| Composition of Mixture H-0 | | |
|---|---|---|
| Compound # | Abbreviation | Conc. /Mass-% |
| 1 | 7(OPG-OT)(OPP-N) | 4.9 |
| 2 | 9(OPG-OT)(OPP-N) | 4.9 |
| 3 | Mixture A-0 | 88.2 |
| Σ | | 100.0 |

| Composition of Mixture 1-0 | | |
|---|---|---|
| Compound # | Abbreviation | Conc. /Mass-% |
| 1 | 7(OGU-F)(OPP-N) | 4.9 |
| 2 | 9(OGU-F)(OPP-N) | 4.9 |
| 3 | Mixture B-0 | 88.2 |
| Σ | | 100.0 |

The chiral mixtures D-1, E-1 and F-1 are obtained by adding 2% of the chiral binaphthol compound ($3C1(10)_2$) N* alternatively to each of the nematic hosts D-0, E-0 and F-0, respectively. These host mixtures D-0 to F-0 do all comprise the two symmetric bimesogens with an odd number of atoms in the spacer group, which are used in example 2 of GB 2 356 629.

The chiral mixtures G-1, H-1 and I-1 are obtained by adding 2% of the chiral binaphthol compound $3C1(10)_2$) N* alternatively to the each of nematic hosts G-0, H-0 and I-0, respectively.

Example 1.a)

In this example the alignment of the samples is achieved in the blue phase.

The uniform lying helix texture forms spontaneously (i.e. no mechanical shearing is required) in a hybrid aligned cell when the chiral LC mixture is cooled from the blue phase in the presence of an ac electric field of amplitude lower than the critical field required to unwind the helix. In this work, this alignment technique is applied to systems consisting of dimers with odd-numbered atoms in the spacer, both of symmetric and of non-symmetric structure and optionally mesogenic compopunds having low molecular mass.

Good uniformly lying helix texture (ULH) has been observed for mixtures D-1, E-1 and I-1. These three samples contain either symmetrical or non-symmetrical dimers with odd spacers in different concentrations. This alignment method also works for the mixture F-1, which contains only symmetric and non-symmetric dimers. The compositions of mixtures are given in tables 1 and 2; the data, such a clearing point and aligning field, are summarised in table 3 for these four samples.

Table 3 Results for mixtures aligned by cooling from the blue phase

| Chiral mixtures | D-1 | E-1 | I-1 | F-1 |
|---|---|---|---|---|
| Host mixture | D-01 | E-0 | B-0 | F-0 |
| $\Delta\varepsilon$ of non-chiral host mixture | 2.0 | 2.3 | n.d. | n.d. |
| Chiral compound | $3C1(10)_2)N^*$ | | | |
| Cholest. pitch (P) at 30°C /μm | 0.415 | 0.365 | 0.406 | 0.449 |
| Clearing point (T(N,I))* /°C | 85.4 | 83.2 | 79.8 | 52.2 |
| $E_{ULH}$§ (V/μm) | 5 | 6.6 | 2.4 | 4 |
| Remarks: *: measured by microscopy on cooling,<br>§: optimum aligning field for ULH texture,<br>n.d.: not determined.<br>Remarks: n.d.: not determined | | | | |

Example 1.b)

In this example the alignment of the samples is achieved by ramping down the applied electric field.

Due to the charge gradient induced by an electric field, the uniform lying helix forms spontaneously in a hybrid aligned cell of thickness 5μm, independent of the cholesteric pitch induced by a chiral dopant when the following procedure is implemented.

1. The system is kept at a temperature preferably 20°, more preferably 10°, most preferably 3° below the temperature of the transition of the chiral mixture from the nematic (cholesteric) to the isotropic phase.

2. After the initial Grandjean texture is formed, the aligning field is ramped up and / or increased gradually above the critical field for the helix unwinding to achieve true homeotropic texture.

3. The aligning field is then decreased gradually from the value above the critical field to 0 V/μm over a time of preferably 600 minutes, more preferably of 60 minutes, most preferably of 1 minute, for example with a sweeping speed of 1.5 V/min.

Good alignment in ULH texture is achieved e.g. when this alignment method is applied to:

a) the mixture D-1, which contains about 25% symmetric dimers and

b) the three mixtures G-1, H-1 and I-1, which contain 10% of non-symmetric dimers in different host mixtures such as A-0 and B-0.

The results are summarised in table 4.

Table 4 Results for mixtures aligned using the decreasing field technique

| Chiral mixtures | D-1 | G-1 | H-1 | I-1 |
|---|---|---|---|---|
| Host mixture | D-0 | A-0 | | B-0 |
| $\Delta\varepsilon$ of non-chiral host mixture | 2.0 | n.d. | | n.d. |
| Chiral compound | $3C1(10)_2)N^*$ | | | |
| Cholest. pitch (P) at 30°C /μm | 0.365 | 0.480 | 0.475 | 0.406 |
| Clearing point (T(N,I))* /°C | 85.4 | 94.9 | 97.8 | 79.8 |
| Temperature (T(Gj.,h)) /°C | 80 | 91 | 94.8 | 77 |
| Electric field $E_{homeo}{}^{\#}$ /V/μm | 11.8 | 7.4 | 7.6 | 6.1 |
| Remarks: *: measured by microscopy on cooling, #: Electric field for Grandjean-homeotropic transition at T(Gj.,h), n.d.: not determined. | | | | |

## Claims

**1.** Liquid crystal medium comprising

- a chiral component, component A;
- a bimesogenic component, component B;
- a dielectrically positive component, component C; and
- optionally a dielectrically negative component, component D; and
- optionally a dielectrically neutral component, component E;

**characterized in that**
said component B comprises a bimesogenic compound having a non-symmetric structure and
said component C comprises one or more compounds selected from the group of compounds of formulae IIIb to IIIg

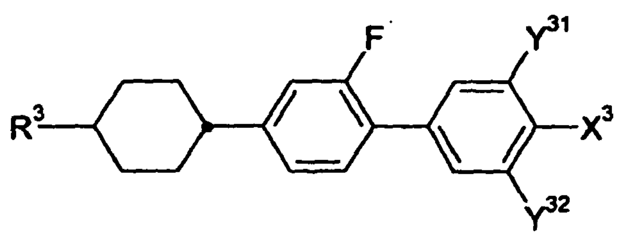

IIIb

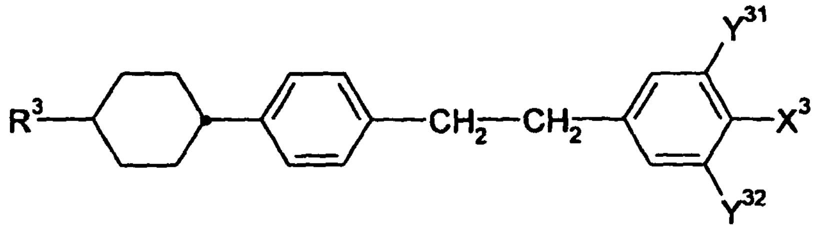

IIIc

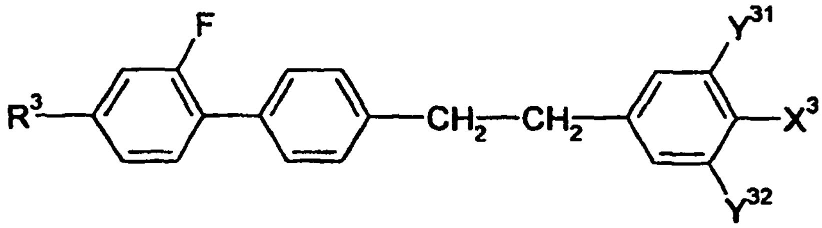

IIId

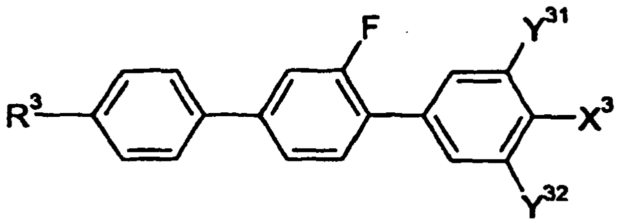

IIIe

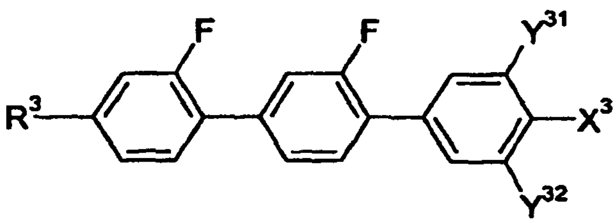

IIIf

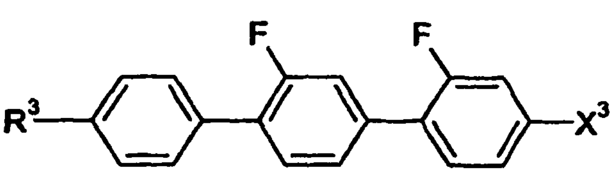

IIIg

wherein

$R^3$ is alkyl, alkoxy, fluorinated alkyl or fluorinated alkoxy with 1 to 7 C-atoms, alkenyl, alkenyloxy, alkoxyalkyl

or fluorinated alkenyl with 2 to 7 C-atoms;
$X^3$ is F, Cl or fluorinated alkyl or fluorinated alkoxy, each with 1 to 4 C-atoms, ; and
$Y^{31}$ and $Y^{32}$ are, independently of each other H or F;

wherein, optionally, two of the 6-membered rings shown directly linked, may be linked by a group selected from $-CH_2-CH_2-$, $-CF_2-CF_2-$, $-CF_2-O-$, $-O-CF_2-$ and -CO-O-.

2. Liquid crystal medium according to claims 1, **characterized in that** component C comprises one or more compounds of formula IIIb

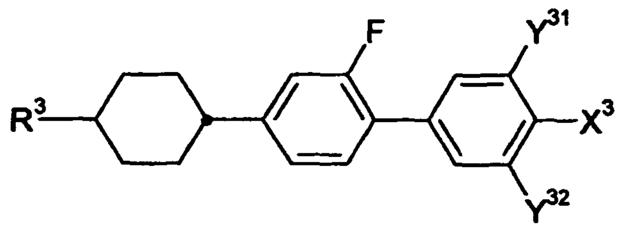

IIIb

wherein the parameters have the respective meanings given in claim 1.

3. Liquid crystal medium according to any one of the preceding claims 1 and 2, **characterized in that** it comprises

- a dielectrically neutral component, component E.

4. Liquid crystal medium according to any one of the preceding claims 1 to 3, **characterized in that** said component B comprises a bimesogenic compound having a non-symmetric structure and an odd number of atoms in the spacer group between the two mesogenic units.

5. Liquid crystal medium according to any one of the preceding claims 1 to 4, **characterized in that** it comprises both a dielectrically negative component, component D and a dielectrically neutral component, component E.

6. Liquid crystal medium according to any one of the preceding claims 1 to 5, **characterized in that** said component A comprises one or more compounds selected from the group of compounds of formulae I, I' and I"

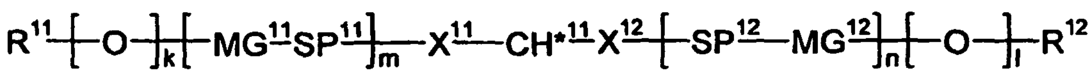

I

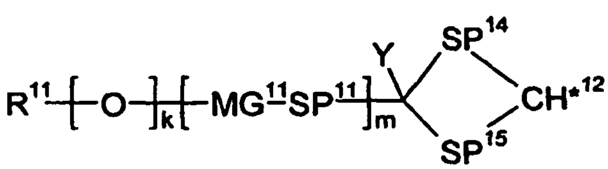

I'

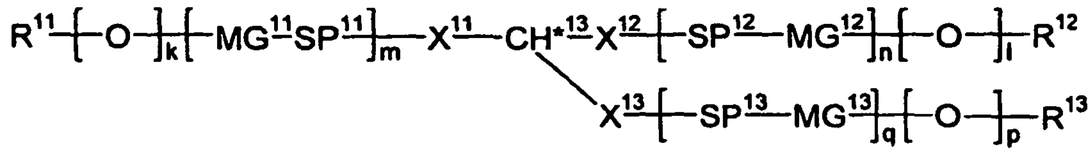

I''

wherein

$Y$, $R^{11}$, $R^{12}$ and $R^{13}$ are each, independently of one another, F, Cl, CN, $NO_2$, NCS, SCN, OCN, a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-,- S-, -NH-, $-N(CH_3)-$, -CO-, -COO-, -OCO-, -OCOO-, -S-CO-, -CO-S-, -CH=CH-, -CH=CF-, -CF=CH-, -CF=CF- or -C=C- in such a manner, that oxygen atoms are not linked directly to one another, or, in case they are not linked to an O atom, H;

$SP^{11}$, $SP^{12}$ and $SP^{13}$ are each, independently of one another, a divalent spacer group comprising 1 to 40, preferably 4 to 20, C atoms, preferably an alkylene group, it being also possible for one or more $CH_2$ groups in the spacer groups to be replaced, in each case independently from one another, by -O-, -S-, -NH-, $-N(CH_3)-$, -CO-, -COO-, -OCO-, -OCOO-, - S-CO-, -CO-S-, -CH=CH-, -CH=CF-, -CF=CH-, -CF=CF-, $-CF_2-$ or -C≡C- in such a manner, that oxygen atoms are not linked directly to one another;

$SP^{14}$ and $SP^{15}$ are each, independently of one another, a divalent spacer group comprising 1 to 40, preferably 4 to 20, C atoms;

$X^{11}$, $X^{12}$ and $X^{13}$ are each, independently of one another, -O-, -S-, -CO-, -COO-, -OCO-, -OCOO-, -CO-NH-, -NH-CO-, $-CH_2CH_2-$, $-OCH_2-$, $-CH_2O-$, $-SCH_2-$, $-CH_2S-$, -CF=CF-, -CH=CH-, -OCO-CH=CH-, -C=C- or a single bond;

k, l, n, m, p and q are each, independently of one another, 0 or 1,

m+n+q is 1, 2 or 3;

$MG^{11}$, $MG^{12}$ and $MG^{13}$ are each, independently of one another, a mesogenic group;

$CH^{*11}$ and $CH^{*12}$ are, independently from each other, a chiral, bivalent group; and

$CH^{*13}$ is a chiral, trivalent group.

**7.** Liquid crystal medium according to any one of the preceding claims 1 to 7, **characterized in that** it said component B comprises one or more compounds of formula II

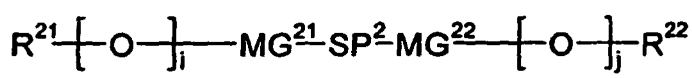

II

wherein

$R^{21}$ and $R^{22}$ are each, independently of one another, F, Cl, CN, $NO_2$, NCS, SCN, OCN, a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF- or -C≡C- in such a manner, that oxygen atoms are not linked directly to one another, or, in case they are not linked to an O atom, H;

$MG^{21}$ and $MG^{22}$ are each, independently of one another, a mesogenic group;

$SP^2$ is a divalent spacer group comprising 1 to 40, preferably 3 to 20, C atoms, preferably an alkylene group, it being also possible for one or more $CH_2$ groups in the spacer groups to be replaced, in each case independently from one another, by -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF-, $-CF_2-$ or -C≡C- in such a manner, that oxygen atoms are not linked directly to one another;

i and j are, independently of each other, 0 or 1;

whereby the moiety $R^{21}$-[-O-]$_i$-$MG^{21}$- is different from the moiety $R^{22}$-[-O-]$_j$-$MG^{22}$-.

**8.** Liquid crystal device, **characterized in that** it comprises a liquid crystal medium according to at least one of claims 1 to 7.

**9.** Liquid crystal device according to claim 8, **characterized in that** it is an electro-optical display.

**10.** Liquid crystal device according to any one of claims 8 or 9, **characterized in that** it comprises a display that comprises

- a pair of substrates

  - each substrate bearing one or more electrodes; and
  - one substrate bearing an orientation layer for planar alignment of liquid crystals or being otherwise treated for planar orientation of liquid crystals; and
  - the other substrate bearing an orientation layer for homeotropic alignment of liquid crystals or being otherwise treated for homeotropic alignment of liquid crystals

and
- a liquid crystal material comprising the liquid crystal medium according to any one of claims 1 to 7,

whereby said material is aligned in a uniformly lying helix structure with a helical pitch of 500 nm or less.

**11.** Liquid crystal device according to any one of claims 8 to 10, **characterized in that** said liquid crystal material exhibits a blue phase.

**12.** Liquid crystal device according to any one of claims 8 to 11, **characterized in that** the orientation of said liquid crystal material in said uniformly lying helix structure is achieved by application of an alternating electrical field at a temperature at which the liquid crystal material is in the blue phase.

**13.** Use of a liquid crystal medium according to at least one of claims 1 to 7 in a liquid crystal device.

**Patentansprüche**

**1.** Flüssigkristallmedium enthaltend

- eine chirale Komponente, Komponente A;
- eine bimesogene Komponente, Komponente B;
- eine dielektrisch positive Komponente, Komponente C, und
- gegebenenfalls eine dielektrisch negative Komponente, Komponente D, und
- gegebenenfalls eine dielektrisch neutrale Komponente, Komponente E;

**dadurch gekennzeichnet, dass**
die Komponente B eine bimesogene Verbindung mit nicht symmetrischer Struktur enthält und
die Komponente C eine oder mehrere Verbindungen ausgewählt aus der Gruppe der Verbindungen der Formeln IIIb bis IIIg

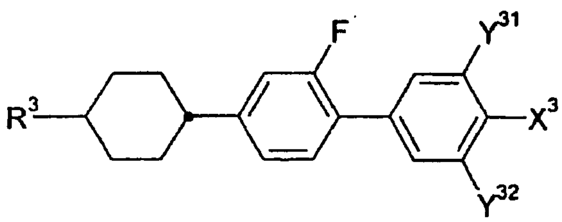

IIIb

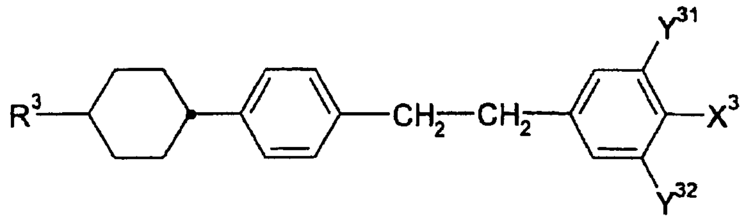

IIIc

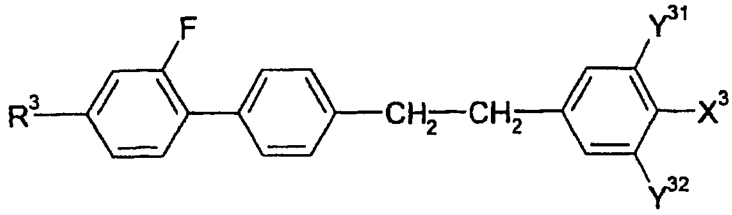

IIId

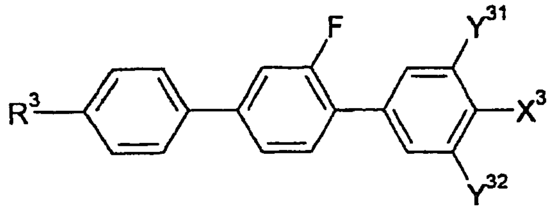

IIIe

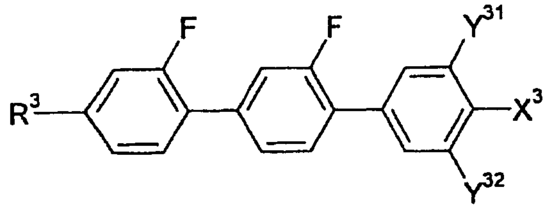

IIIf

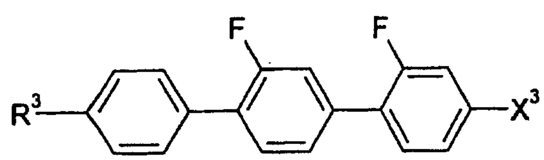

IIIg

enthält, worin

$R^3$ Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet;
$X^3$ F, Cl oder fluoriertes Alkyl oder fluoriertes Alkoxy, jeweils 1 bis 4 C-Atomen, und
$Y^{31}$ und $Y^{32}$ jeweils unabhängig von einander H oder F bedeuten;

worin gegebenenfalls zwei der als direkt verknüpft gezeigten 6-gliedrigen Ringe durch eine Gruppe ausgewählt aus

$-CH_2-CH_2-$, $-CF_2-CF_2-$, $-CF_2-O-$, $-O-CF_2-$ und $-CO-O-$ verknüpft sein können.

**2.** Flüssigkristallmedium nach Anspruch 1, **dadurch gekennzeichnet, dass** die Komponente C eine oder mehrere Verbindungen der Formel IIIb

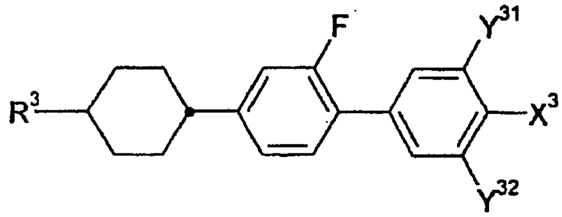

IIIb

enthält, worin die Parameter die jeweils in Anspruch 1 angegebenen Bedeutungen besitzen.

**3.** Flüssigkristallmedium nach einem beliebigen der vorhergehenden Ansprüche 1 und 2, **dadurch gekennzeichnet, dass** es

- eine dielektrisch neutrale Komponente, Komponente E

enthält.

**4.** Flüssigkristallmedium nach einem beliebigen der vorhergehenden Ansprüche 1 bis 3, **dadurch gekennzeichnet, dass** die Komponente B eine bismesogene Verbindung mit nicht symmetrischer Struktur und einer ungeraden Atomanzahl in der Spacergruppe zwischen den beiden mesogenen Einheiten enthält.

**5.** Flüssigkristallmedium nach einem beliebigen der vorhergehenden Ansprüche 1 bis 4, **dadurch gekennzeichnet, dass** es sowohl eine dielektrisch negative Komponente, Komponente D, als auch eine dielektrisch neutrale Komponente, Komponente E, enthält.

**6.** Flüssigkristallmedium nach einem beliebigen der vorhergehenden Ansprüche 1 bis 5, **dadurch gekennzeichnet, dass** die Komponente A eine oder mehrere Verbindungen ausgewählt aus der Gruppe der Verbindungen der Formeln I, I' und I"

$$R^{11}-\left[O\right]_k-\left[MG^{11}-SP^{11}\right]_m-X^{11}-CH^{*11}-X^{12}-\left[SP^{12}-MG^{12}\right]_n-\left[O\right]_l-R^{12} \qquad \text{I}$$

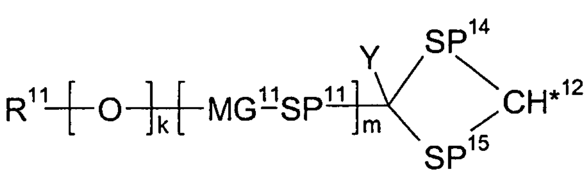

I'

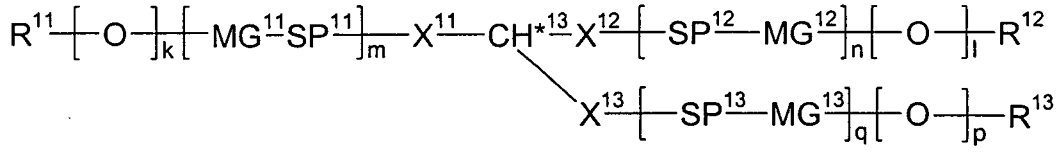

I''

enthält, worin

Y, $R^{11}$, $R^{12}$ und $R^{13}$ jeweils unabhängig voneinander F, Cl, CN, $NO_2$, NCS, SCN, OCN, eine geradkettige oder verzweigte Alkylgruppe mit 1 bis 25 C-Atomen bedeuten, die unsubstituiert oder ein- oder mehrfach durch Halogen oder CN substituiert sein kann, wobei gegebenenfalls auch eine oder mehrere nicht benachbarte $CH_2$-Gruppen jeweils unabhängig voneinander durch -O-, -S-, -NH-, -N($CH_3$)-, -CO-, -COO-, -OCO-, -OCOO-, -S-CO-, -CO-S-, -CH=CH-, -CH=CF-, -CF=CH-, -CF=CF- oder -C=C- so ersetzt sind, dass Sauerstoffatome nicht direkt miteinander verknüpft sind, oder, wenn sie nicht mit einem O-Atom verknüpft sind, H bedeuten;
$SP^{11}$, $SP^{12}$ und $SP^{13}$ jeweils unabhängig voneinander eine zweiwertige Spacergruppe mit 1 bis 40, vorzugsweise 4 bis 20 C-Atomen bedeuten, vorzugsweise eine Alkylengruppe, wobei gegebenenfalls auch eine oder mehrere $CH_2$-Gruppen in den Spacergruppen jeweils unabhängig voneinander durch -O-, -S-, -NH-, -N($CH_3$)-, -CO-, -COO-, -OCO-, -OCOO-, -S-CO-, -CO-S-, -CH=CH-, -CH=CF-, -CF=CH-, -CF=CF-, -$CF_2$- oder -C≡C- so ersetzt sind, dass Sauerstoffatome nicht direkt miteinander verknüpft sind;
$SP^{14}$ und $SP^{15}$ jeweils unabhängig voneinander eine zweiwertige Spacergruppe mit 1 bis 40, vorzugsweise 4 bis 20 C-Atomen bedeuten;
$X^{11}$, $X^{12}$ und $X^{13}$ jeweils unabhängig voneinander -O-, -S-, -CO-, -COO-, -OCO-, -OCOO-, -CO-NH-, -NH-CO-, -$CH_2CH_2$-, -$OCH_2$-, -$CH_2O$-, -$SCH_2$-, -$CH_2S$-, -CF=CF-, -CH=CH-, -OCO-CH=CH-, -C≡C- oder eine Einfachbindung bedeuten;
k, l, n, m, p und q jeweils unabhängig voneinander 0 oder 1 bedeuten,
m+n+q 1, 2 oder 3 bedeutet;
$MG^{11}$, $MG^{12}$ und $MG^{13}$ jeweils unabhängig voneinander eine mesogene Gruppe bedeuten;
$CH^{*11}$ und $CH^{*12}$ jeweils unabhängig voneinander eine chirale, zweiwertige Gruppe bedeuten und
$CH^{*13}$ eine chirale, dreiwertige Gruppe bedeutet.

7. Flüssigkristallmedium nach mindestens einem der vorhergehenden Ansprüche 1 bis 6 **dadurch gekennzeichnet, dass** die Komponente B eine oder mehrere Verbindungen der Formel II

$$R^{21}-[O]_i-MG^{21}-SP^2-MG^{22}-[O]_j-R^{22} \qquad II$$

enthält, worin

$R^{21}$ und $R^{22}$ jeweils unabhängig voneinander F, Cl, CN, $NO_2$, NCS, SCN, OCN, eine geradkettige oder verzweigte Alkylgruppe mit 1 bis 25 C-Atomen bedeuten, die unsubstituiert oder ein- oder mehrfach durch Halogen oder CN substituiert sein kann, wobei gegebenenfalls auch eine oder mehrere nicht benachbarte $CH_2$-Gruppen jeweils unabhängig voneinander durch -O-, -S-, -NH-, -N($CH_3$)-, -CO-, -COO-, -OCO-, -OCOO-, -S-CO-, -CO-S-, -CH=CH-, -CH=CF-, -CF=CH-, -CF=CF- oder -C≡C- so ersetzt sind, dass Sauerstoffatome nicht direkt miteinander verknüpft sind, oder, wenn sie nicht mit einem O-Atom verknüpft sind, H bedeuten;
$MG^{21}$ und $MG^{22}$ jeweils unabhängig voneinander eine mesogene Gruppe bedeuten;
$SP^2$ eine zweiwertige Spacergruppe mit 1 bis 40, vorzugsweise 3 bis 20 C-Atomen bedeutet, vorzugsweise eine Alkylengruppe, wobei gegebenenfalls auch eine oder mehrere $CH_2$-Gruppen in den Spacergruppen jeweils unabhängig voneinander durch -O-, -S-, -NH-, -N($CH_3$)-, -CO-, -COO-, -OCO-, -OCOO-, -S-CO-, -CO-S-, -CH=CH-, -CH=CF-, -CF=CH-, -CF=CF-, -$CF_2$- oder -C≡C- so ersetzt sind, dass Sauerstoffatome nicht direkt miteinander verknüpft sind;
i und j jeweils unabhängig voneinander 0 oder 1 bedeuten;

wobei der Rest $R^{21}$-[-O-]$_i$-$MG^{21}$- vom Rest $R^{22}$-[-O-]$_j$-$MG^{22}$- verschieden ist.

8. Flüssigkristallvorrichtung, **dadurch gekennzeichnet, dass** sie ein Flüssigkristallmedium nach mindestens einem der Ansprüche 1 bis 7 enthält.

9. Flüssigkristallvorrichtung nach Anspruch 8, **dadurch gekennzeichnet, dass** es sich um eine elektrooptische Anzeige handelt.

10. Flüssigkristallvorrichtung nach einem beliebigen der Ansprüche 8 oder 9, **dadurch gekennzeichnet, dass** sie eine Anzeige enthält, die das Folgende enthält

    - ein Substratpaar

        - wobei jedes Substrat eine oder mehrere Elektroden trägt und
        - ein Substrat eine Ausrichtungsschicht für die planare Orientierung von Flüssigkristallen trägt oder anderweitig für die planare Ausrichtung von Flüssigkristallen behandelt ist und
        - das andere Substrat eine Ausrichtungsschicht für die homöotrope Orientierung von Flüssigkristallen trägt oder anderweitig für die homöotrope Ausrichtung von Flüssigkristallen behandelt ist

    und
    - ein Flüssigkristallmaterial enthaltend das Flüssigkristallmedium nach einem beliebigen der Ansprüche 1 bis 7;

    wobei das Material in einer ULH-Struktur (uniformly lying helix) mit einer helikalen Ganghöhe von 500 nm oder weniger orientiert ist.

11. Flüssigkristallvorrichtung nach einem beliebigen der Ansprüche 8 bis 10, **dadurch gekennzeichnet, dass** das Flüssigkristallmaterial eine blaue Phase aufweist.

12. Flüssigkristallvorrichtung nach einem beliebigen der Ansprüche 8 bis 11, **dadurch gekennzeichnet, dass** die Ausrichtung des Flüssigkristallmaterials in der ULH-Struktur durch Anlegen eines Wechselstromfeldes bei einer Temperatur, bei der sich das Flüssigkristallmaterial in der blauen Phase befindet, erreicht wird.

13. Verwendung eines Flüssigkristallmediums nach mindestens einem der Ansprüche 1 bis 7 in einer Flüssigkristallvorrichtung.

## Revendications

1. Milieu de cristal liquide comprenant :

    - un composant chiral, soit le composant A ;
    - un composant bimésogène, soit le composant B ;
    - un composant diélectriquement positif, soit le composant C ; et
    - en option, un composant diélectriquement négatif, soit le composant D ; et
    - en option, un composant diélectriquement neutre, soit le composant E,

    **caractérisé en ce que** :

    ledit composant B comprend un composé bimésogène qui présente une structure non symétrique ; et
    ledit composant C comprend un ou plusieurs composés qui sont choisis parmi le groupe de composés des formules IIIb à IIIg

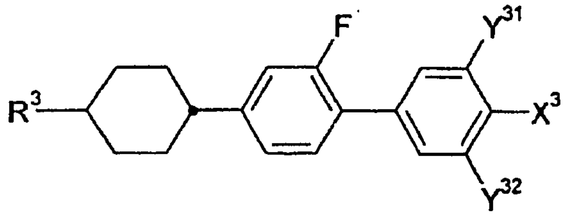

IIIb

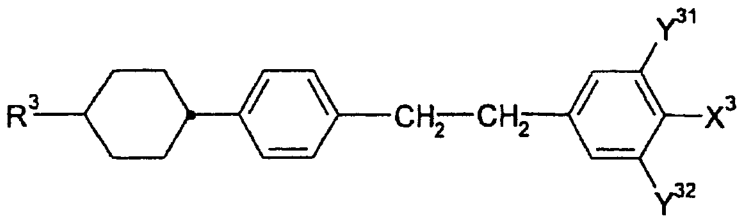

IIIc

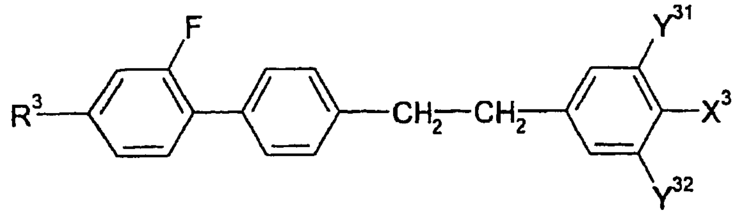

IIId

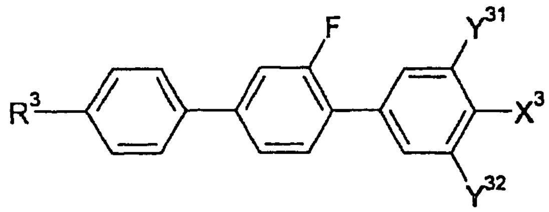

IIIe

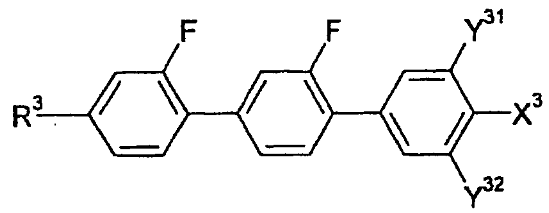

IIIf

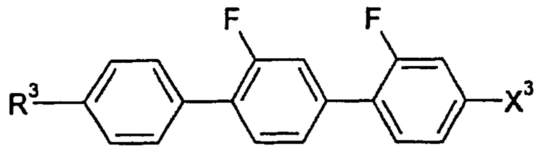

IIIg

dans lesquelles :

$R^3$ est alkyle, alkoxy, alkyle fluoré ou alkoxy fluoré avec de 1 à 7 atomes de C, alkényle, alkényloxy, alkoxyalkyle ou alkényle fluoré avec de 2 à 7 atomes de C ;
$X^3$ est F, Cl ou alkyle fluoré ou alkoxy fluoré, chacun avec de 1 à 4 atomes de C; et
$Y^{31}$ et $Y^{32}$ sont, indépendamment l'un de l'autre, H ou F ;

dans lesquelles, en option, deux des anneaux à 6 branches représentés liés directement peuvent être liés au moyen d'un groupe choisi parmi
$-CH_2-CH_2-$, $-CF_2-CF_2-$, $-CF_2-O-$, $-O-CF_2-$ et -CO-O-.

2. Milieu de cristal liquide selon la revendication 1, **caractérisé en ce que** le composant C comprend un ou plusieurs composés de la formule IIIb

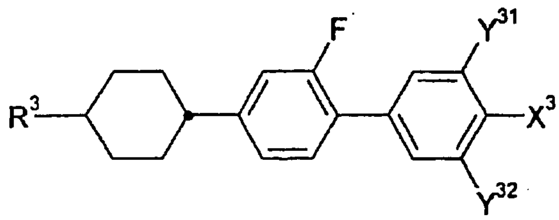

IIIb

dans laquelle les paramètres présentent les significations respectives données selon la revendication 1.

3. Milieu de cristal liquide selon l'une quelconque des revendications précédentes 1 et 2, **caractérisé en ce qu'**il comprend :

- un composant diélectriquement neutre, soit le composant E.

4. Milieu de cristal liquide selon l'une quelconque des revendications précédentes 1 à 3, **caractérisé en ce que** ledit composant B comprend un composé bimésogène présentant une structure non symétrique et un nombre impair d'atomes dans le groupe d'espaceur entre les deux unités mésogènes.

5. Milieu de cristal liquide selon l'une quelconque des revendications précédentes 1 à 4, **caractérisé en ce qu'**il comprend à la fois un composant diélectriquement négatif, soit le composant D, et un composant diélectriquement neutre, soit le composant E.

6. Milieu de cristal liquide selon l'une quelconque des revendications précédentes 1 à 5, **caractérisé en ce que** ledit composant A comprend un ou plusieurs composés choisis parmi le groupe de composés des formules I, I' et I"

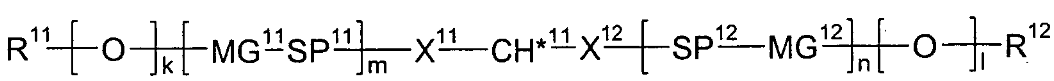

I

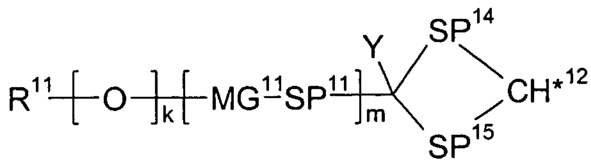

I'

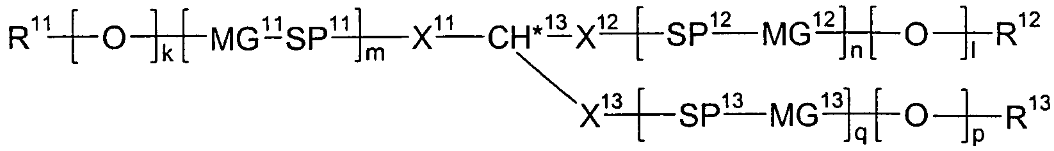

I''

dans lesquelles

Y, $R^{11}$, $R^{12}$ et $R^{13}$ sont, chacun indépendamment les uns des autres, F, Cl, CN, $NO_2$, NCS, SCN, OCN, un groupe alkyle en chaîne droite ou ramifié avec de 1 à 25 atomes de C qui peut être non substitué, mono- ou polysubstitué par halogène ou CN, étant entendu qu'il est également possible qu'un ou plusieurs groupes $CH_2$ non adjacents soi(en)t remplacé(s), dans chaque cas indépendamment les uns des autres, par -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF- ou -C≡C- de telle sorte que des atomes d'oxygène ne soient pas liés directement les uns aux autres ou, dans le cas où ils ne sont pas liés à un atome de O, H ;
$SP^{11}$, $SP^{12}$ et $SP^{13}$ sont, chacun indépendamment les uns des autres, un groupe d'espaceur divalent comprenant de 1 à 40 atomes de C, de préférence de 4 à 20 atomes de C, de préférence un groupe alkylène, étant entendu qu'il est également possible qu'un ou plusieurs groupes $CH_2$ dans les groupes d'espaceur soi(en)t remplacé(s), dans chaque cas indépendamment les uns des autres, par -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF-, $-CF_2-$ ou -C≡C- de telle sorte que des atomes d'oxygène ne soient pas liés directement les uns aux autres ;
$SP^{14}$ et $SP^{15}$ sont, chacun indépendamment l'un de l'autre, un groupe d'espaceur divalent comprenant de 1 à 40 atomes de C, de préférence de 4 à 20 atomes de C ;
$X^{11}$, $X^{12}$ et $X^{13}$ sont, chacun indépendamment les uns des autres, -O-, -S-, -CO-, -COO-, -OCO-, -OCOO-, -CO-NH-, -NH-CO-, $-CH_2CH_2-$, $-OCH_2-$, $-CH_2O-$, $-SCH_2-$, $-CH_2S-$, -CF=CF-, -CH=CH-, -OCO-CH=CH-, -C≡C- ou une liaison simple ;
k, l, n, m, p et q sont, chacun indépendamment les uns des autres, 0 ou 1,
m+n+q vaut 1, 2 ou 3;
$MG^{11}$, $MG^{12}$ et $MG^{13}$ sont, chacun indépendamment les uns des autres, un groupe mésogène ;
$CH^{*11}$ et $CH^{*12}$ sont, indépendamment l'un de l'autre, un groupe bivalent chiral ; et
$CH^{*13}$ est un groupe trivalent chiral.

7. Milieu de cristal liquide selon l'une quelconque des revendications précédentes 1 à 6, **caractérisé en ce que** ledit composant B comprend un ou plusieurs composés de la formule II

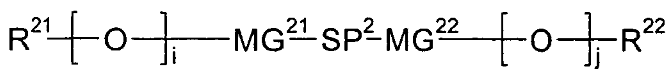

II

dans laquelle

$R^{21}$ et $R^{22}$ sont, chacun indépendamment l'un de l'autre, F, Cl, CN, $NO_2$, NCS, SCN, OCN, un groupe alkyle en chaîne droite ou ramifié avec de 1 à 25 atomes de C qui peut être non substitué, mono- ou polysubstitué par halogène ou CN, étant entendu qu'il est également possible qu'un ou plusieurs groupes $CH_2$ non adjacents soi(en)t remplacé(s), dans chaque cas indépendamment les uns des autres, par -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF- ou -C≡C- de telle sorte que

des atomes d'oxygène ne soient pas liés directement les uns aux autres ou, dans le cas où ils ne sont pas liés à un atome de O, H ;
$MG^{21}$ et $MG^{22}$ sont, chacun indépendamment l'un de l'autre, un groupe mésogène ;
$SP^2$ est un groupe d'espaceur divalent comprenant de 1 à 40 atomes de C, de préférence de 3 à 20 atomes de C, de préférence un groupe alkylène, étant entendu qu'il est également possible qu'un ou plusieurs groupes $CH_2$ dans les groupes d'espaceur soi(en)t remplacé(s), dans chaque cas indépendamment les uns des autres, par -O-, -S-, -NH-, $-N(CH_3)-$, -CO-, -COO-, -OCO-, -OCOO-, -S-CO-, -CO-S-, -CH=CH-, -CH=CF-, -CF=CH-, -CF=CF-, $-CF_2-$ ou -C≡C- de telle sorte que des atomes d'oxygène ne soient pas liés directement les uns aux autres ;
i et j sont, indépendamment l'un de l'autre, 0 ou 1 ;

et ainsi, la moitié $R^{21}$-[-O-]$_i$-$MG^{21}$- est différente de la moitié $R^{22}$-[-O-]$_j$-$MG^{22}$-.

**8.** Dispositif à cristal liquide, **caractérisé en ce qu'**il comprend un milieu de cristal liquide selon au moins l'une des revendications 1 à 7.

**9.** Dispositif à cristal liquide selon la revendication 8, **caractérisé en ce qu'**il s'agit d'un affichage électro-optique.

**10.** Dispositif à cristal liquide selon l'une quelconque des revendications 8 ou 9, **caractérisé en ce qu'**il est constitué par un affichage qui comprend :

- une paire de substrats

  - chaque substrat étant porteur d'une ou de plusieurs électrodes ; et
  - un substrat étant porteur d'une couche d'orientation pour un alignement plan de cristaux liquides ou étant sinon traité pour une orientation plane de cristaux liquides ; et
  - l'autre substrat étant porteur d'une couche d'orientation pour un alignement homéotrope de cristaux liquides ou étant sinon traité pour un alignement homéotrope de cristaux liquides

et
- un matériau de cristal liquide comprenant le milieu de cristal liquide selon l'une quelconque des revendications 1 à 7,

et ainsi, ledit matériau est aligné selon une structure en hélice s'étendant uniformément moyennant un pas d'hélice de 500 nm ou moins.

**11.** Dispositif à cristal liquide selon l'une quelconque des revendications 8 à 10, **caractérisé en ce que** ledit matériau de cristal liquide présente une phase bleue.

**12.** Dispositif à cristal liquide selon l'une quelconque des revendications 8 à 11, **caractérisé en ce que** l'orientation dudit matériau de cristal liquide selon ladite structure en hélice s'étendant uniformément est réalisée au moyen de l'application d'un champ électrique alternatif à une température à laquelle le matériau de cristal liquide est selon la phase bleue.

**13.** Utilisation d'un milieu de cristal liquide selon au moins l'une des revendications 1 à 7 dans un dispositif à cristal liquide.